(19) **Europäisches Patentamt**
**European Patent Office**
**Office européen des brevets**

(11) **EP 4 250 805 A1**

(12) **EUROPEAN PATENT APPLICATION**
published in accordance with Art. 153(4) EPC

(43) Date of publication:
**27.09.2023 Bulletin 2023/39**

(51) International Patent Classification (IPC):
**H04W 24/08** (2009.01)  **H04L 1/00** (2006.01)

(21) Application number: **21902566.5**

(22) Date of filing: **06.12.2021**

(52) Cooperative Patent Classification (CPC):
**H04B 7/0413; H04B 7/06; H04B 17/309;**
**H04L 1/00; H04W 24/08; H04W 24/10**

(86) International application number:
**PCT/CN2021/135839**

(87) International publication number:
**WO 2022/121861 (16.06.2022 Gazette 2022/24)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **11.12.2020 CN 202011447158**

(71) Applicant: **Huawei Technologies Co., Ltd.**
**Shenzhen, Guangdong 518129 (CN)**

(72) Inventors:
• **LIU, Chenchen**
  **Shenzhen, Guangdong 518129 (CN)**
• **YU, Jian**
  **Shenzhen, Guangdong 518129 (CN)**
• **GAN, Ming**
  **Shenzhen, Guangdong 518129 (CN)**
• **GONG, Bo**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **CHANNEL SOUNDING METHOD AND RELATED DEVICE**

(57)     This application relates to the wireless communication field, for example, is applicable to a wireless local area network supporting the 802.11be standard, and in particular, to a channel sounding method and a related apparatus. The method includes: An access point generates and sends an NDPA frame. The NDPA frame includes first indication information. The first indication information indicates that the NDPA frame includes two types of station information fields. A first-type station information field is in an HE format. Each second station information field in a second-type station information field includes second indication information. The second indication information indicates whether the second station information field including the second indication information is in an HE format or an EHT format According to embodiments of this application, the HE station and the EHT station may be notified to simultaneously perform channel sounding, to support beamforming during aggregated packet transmission.

FIG. 14A

**(Cont. next page)**

CONT.
FROM
FIG. 14A

CONT.
FROM
FIG. 14A

CONT.
FROM
FIG. 14A

S105: If determining that an association identifier in a second station information field of the NDPA frame is the same as an association identifier of a second station, determine a format of the second station information field based on second indication information in the second station information field, and parse the second station information field based on the determined format

S106: Send a null data packet NDP

S106: Send a null data packet NDP

S107: Obtain channel state information based on the received NDP

S108: Obtain channel state information based on the received NDP

S109: Send a beamforming report poll BFRP trigger frame, where the BFRP trigger frame is used to trigger the first station and the second station to feed back beamforming reports

S109: Send a beamforming report poll BFRP trigger frame, where the BFRP trigger frame is used to trigger the first station and the second station to feed back beamforming reports

S110: After receiving the BFRP trigger frame, send a beamforming report, where the beamforming report is generated based on an indication in the first station information field, and the beamforming report carries channel state information

S111: After receiving the BFRP trigger frame, send a beamforming report, where the beamforming report is generated based on an indication in the second station information field, and the beamforming report carries channel state information

FIG. 14B

## Description

This application claims priority to Chinese Patent Application No. 202011447158.5, filed with the China National Intellectual Property Administration on December 11, 2020 and entitled "channel sounding method and related apparatus", which is incorporated herein by reference in its entirety.

## TECHNICAL FIELD

This application relates to the field of wireless communication technologies, and in particular, to a channel sounding method and a related apparatus.

## BACKGROUND

In a wireless local area network (wireless local area network, WLAN), an access point (access point, AP) and a station (station, STA) need to obtain channel state information in advance to perform functions such as beamforming (Beamforming, BF), rate control, and resource allocation. In a WLAN, a process of obtaining channel state information is referred to as a channel sounding process.

With evolution of the WLAN standard, a maximum transmission bandwidth allowed by the WLAN standard develops from 20 MHz to 160 MHz, and a number of space-time streams also develops from one spatial stream to eight spatial streams. Currently, a next-generation Wi-Fi standard, namely, the 802.11be (also referred to as an extremely high throughput (extremely high throughput, EHT) standard or a Wi-Fi 7 standard), of the 802.11ax is being discussed, and a larger bandwidth (for example, 320 MHz) and more streams (for example, 9 to 16 spatial streams) are considered to be introduced. In the following descriptions, a station that supports the 802.11ax standard but does not support the 802.11be standard is briefly referred to as an HE station, and a station that supports the 802.11be standard is briefly referred to as an EHT station.

In the EHT standard, it is considered that a null data packet announcement (null data packet announcement, NDPA) frame is used in a channel sounding process to indicate the HE station and the EHT station to simultaneously perform channel sounding, to support beamforming during aggregated packet transmission.

## SUMMARY

An embodiment of this application provides a channel sounding method and a related apparatus, to notify an HE station and an EHT station to simultaneously perform channel sounding, to support beamforming during aggregated packet transmission.

The following describes this application from different aspects. It should be understood that mutual reference may be made to the following implementations and beneficial effects of the different aspects.

According to a first aspect, this application provides a channel sounding method. The method includes: An access point generates and sends a null data packet announcement (null data packet announcement, NDPA) frame. The NDPA frame includes first indication information. The first indication information indicates that the NDPA frame includes two types of station information fields. A first-type station information field is in a high efficiency (high efficiency, HE) format. Each second station information field in a second-type station information field includes second indication information. The second indication information indicates whether the second station information field including the second indication information is in a first format or a second format.

Optionally, the first format is an HE format, and the second format is an extremely high throughput (extremely high throughput, EHT) format; the first format is an HE format, and the second format is an EHT next-generation protocol format; or the first format is an EHT format, and the second format is an EHT next-generation protocol format.

In this solution, a station information field of an NDPA frame carries indication information for indicating a format of the station information field, and the NDPA frame carries another indication information for indicating that the NDPA frame includes two types of station information fields, to notify an HE station and an EHT station to simultaneously perform channel sounding, to support beamforming during aggregated packet transmission.

With reference to the first aspect, in a possible design, after the access point sends the NDPA frame, the method further includes: The access point sends a null data packet (null data packet, NDP), and sends a trigger frame, where the trigger frame is used to trigger a station to feed back a beamforming report.

With reference to the first aspect, in a possible design, a bandwidth of the NDP is 320 MHz. That the access point sends an NDP includes: The access point sends a 160 MHz HE NDP on a primary 160 MHz channel, and simultaneously/concurrently sends, on a secondary 160 MHz channel, an NDP obtained by performing phase rotation on the 160 MHz HE NDP.

In other words, the 320 MHz NDP includes two portions, where a first portion is a 160 MHz HE NDP, and a second portion is an NDP obtained by performing phase rotation on the 160 MHz HE NDP.

In this solution, sent NDPs are all in an HE format, to resolve time misalignment of different types of NDPs (namely, time misalignment of an HE NDP and an EHT NDP). This avoids interference during channel measurement.

According to a second aspect, this application provides a channel sounding method. The method includes: A second station (an EHT station) receives a null data packet announcement (null data packet announcement, NDPA) frame, and determines, based on first indication information in the NDPA frame, that the NDPA frame includes two types of station information fields; and if determining that an association identifier in a second station information field of the NDPA frame is the same as an association identifier of the second station, the second station determines a format of the second station information field based on second indication information in the second station information field, and parses the second station information field based on the determined format. The NDPA frame includes the first indication information. The first indication information indicates that the NDPA frame includes two types of station information fields. The first indication information indicates that the NDPA frame includes two types of station information fields. A first-type station information field is in an HE format. Each second station information field in a second-type station information field includes second indication information. The second indication information indicates whether the second station information field including the second indication information is in a first format or a second format. The second station is the EHT station.

With reference to the second aspect, in a possible design, after the second station receives the NDPA frame, the method further includes: The second station receives an NDP, and obtains channel state information based on the NDP; the second station receives a trigger frame, where the trigger frame is used to trigger a station to feed back a beamforming report; and the second station sends the beamforming report, where the beamforming report is generated based on an indication in the second station information field of the NDPA frame, and the beamforming report carries the channel state information.

Optionally, a bandwidth of the NDP is 320 MHz. When receiving the NDP, the second station receives a 160 MHz HE NDP on a primary 160 MHz channel, and simultaneously/concurrently receives, on a secondary 160 MHz channel, an NDP obtained by performing phase rotation on the 160 MHz HE NDP.

In other words, the 320 MHz NDP includes two portions, where a first portion is a 160 MHz HE NDP, and a second portion is an NDP obtained by performing phase rotation on the 160 MHz HE NDP.

According to a third aspect, this application provides a channel sounding method. The method includes: A first station (an HE station) receives an NDPA frame; the first station determines, based on first indication information in the NDPA frame, that the NDPA frame is an HE NDPA frame; and the first station determines that an association identifier in a first station information field of the NDPA frame is the same as an association identifier of the first station, and parses the first station information field based on an HE format. The NDPA frame includes the first indication information. The first indication information indicates that the NDPA frame includes two types of station information fields. The first indication information indicates that the NDPA frame includes two types of station information fields. A first-type station information field is in an HE format. Each second station information field in a second-type station information field includes second indication information. The second indication information indicates whether the second station information field including the second indication information is in a first format or a second format. The first station is the HE station.

With reference to the third aspect, in a possible design, after the first station receives the NDPA frame, the method further includes: The first station receives an NDP, and obtains channel state information based on the NDP; the first station receives a trigger frame, where the trigger frame is used to trigger a station to feed back a beamforming report; and the first station sends the beamforming report, where the beamforming report is generated based on an indication in the first station information field of the NDPA frame, and the beamforming report carries the channel state information.

Optionally, a bandwidth of the NDP is 320 MHz. When receiving the NDP, the first station receives a 160 MHz HE NDP only on a primary 160 MHz channel.

According to a fourth aspect, this application provides a communication apparatus. The communication apparatus is an access point or a chip in the access point, for example, a Wi-Fi chip. The communication apparatus includes a processing unit and a transceiver unit. The processing unit is configured to generate an NDPA frame. The NDPA frame includes first indication information. The first indication information indicates that the NDPA frame includes two types of station information fields. A first-type station information field is in an HE format. Each second station information field in a second-type station information field includes second indication information. The second indication information indicates whether the second station information field including the second indication information is in a first format or a second format. The transceiver unit is configured to send the NDPA frame. Optionally, the first format is an HE format, and the second format is an EHT format; or the first format is an HE format, and the second format is an EHT next-generation protocol format; or the first format is an EHT format, and the second format is an EHT next-generation protocol format.

With reference to the fourth aspect, in a possible design, the transceiver unit is further configured to send an NDP, and send a trigger frame, where the trigger frame is used to trigger a station to feed back a beamforming report.

With reference to the fourth aspect, in a possible design, a bandwidth of the NDP is 320 MHz. The transceiver unit is specifically configured to send a 160 MHz HE NDP on a primary 160 MHz channel, and simultaneously/concurrently send, on a secondary 160 MHz channel, an NDP obtained by performing phase rotation on the 160 MHz HE NDP. In other words, the 320 MHz NDP includes two portions, where a first portion is a 160 MHz HE NDP, and a second portion is an NDP obtained by performing phase rotation on the 160 MHz HE NDP.

According to a fifth aspect, this application provides a communication apparatus. The communication apparatus is a second station or a chip in the second station, for example, a Wi-Fi chip. The communication apparatus includes a transceiver unit and a processing unit. The transceiver unit is configured to receive an NDPA frame. The NDPA frame includes first indication information. The first indication information indicates that the NDPA frame includes two types of station information fields. A first-type station information field is in an HE format. Each second station information field in a second-type station information field includes second indication information. The second indication information indicates whether the second station information field including the second indication information is in a first format or a second format. The processing unit is configured to determine, based on the first indication information, that the NDPA frame includes two types of station information fields. The processing unit is further configured to: if it is determined that an association identifier in a second station information field of the NDPA frame is the same as an association identifier of a second station, determine a format of the second station information field based on second indication information in the second station information field, and parse the second station information field based on the determined format.

With reference to the fifth aspect, in a possible design, the transceiver unit is further configured to receive an NDP. The processing unit is further configured to obtain channel state information based on the NDP. The transceiver unit is further configured to receive a trigger frame, where the trigger frame is used to trigger a station to feed back a beamforming report. The transceiver unit is further configured to send a beamforming report, where the beamforming report is generated based on an indication in the second station information field of the NDPA frame, and the beamforming report carries the channel state information.

Optionally, a bandwidth of the NDP is 320 MHz. The transceiver unit is specifically configured to receive a 160 MHz HE NDP on a primary 160 MHz channel, and simultaneously/concurrently receive, on a secondary 160 MHz channel, an NDP obtained by performing phase rotation on the 160 MHz HE NDP.

In other words, the 320 MHz NDP includes two portions, where a first portion is a 160 MHz HE NDP, and a second portion is an NDP obtained by performing phase rotation on the 160 MHz HE NDP.

According to a sixth aspect, this application provides a communication apparatus. The communication apparatus is a first station or a chip in the first station, for example, a Wi-Fi chip. The communication apparatus includes a transceiver unit and a processing unit. The transceiver unit is configured to receive an NDPA frame. The NDPA frame includes first indication information. The first indication information indicates that the NDPA frame includes two types of station information fields. A first-type station information field is in an HE format. Each second station information field in a second-type station information field includes second indication information. The second indication information indicates whether the second station information field including the second indication information is in a first format or a second format. The processing unit is configured to determine the NDPA frame as an HE NDPA frame based on the first indication information in the NDPA frame. The processing unit is further configured to: if it is determined that an association identifier in a first station information field of the NDPA frame is the same as an association identifier of a first station, parse the first station information field based on the HE format.

With reference to the sixth aspect, in a possible design, the transceiver unit is further configured to receive an NDP. The processing unit is further configured to obtain channel state information based on the NDP. The transceiver unit is further configured to receive a trigger frame, where the trigger frame is used to trigger a station to feed back a beamforming report. The transceiver unit is further configured to send a beamforming report, where the beamforming report is generated based on an indication in the first station information field of the NDPA frame, and the beamforming report carries the channel state information.

Optionally, a bandwidth of the NDP is 320 MHz. The transceiver unit is specifically configured to receive a 160 MHz HE NDP only on a primary 160 MHz channel.

In any design of any one of the foregoing aspects, if the bandwidth of the NDP is less than or equal to 160 MHz, the NDP is an HE NDP.

In any design of any one of the foregoing aspects, the first indication information is B0 whose value is 0 and B 1 whose value is 1 in a sounding dialog token field.

In this solution, a ranging bit (namely, a first bit B0 of the sounding dialog token field) of the sounding dialog token field of the NDPA frame is set to 0, and an HE bit (namely, a second bit B 1 of the sounding dialog token field) is set to 1, so that an HE station considers the NDPA frame as an HE NDPA frame, and the HE station can parse the NDPA frame.

In any design of any one of the foregoing aspects, the second indication information is 2 bits that are respectively located in B23 and B24 of the second station information field including the second indication information. When values of B23 and B24 of the second station information field including the second indication information are both 1, it indicates that the second station information field including the second indication information is in the second format; or when values of B23 and B24 of the second station information field including the second indication information are not both 1, it indicates that the second station information field including the second indication information is in the first format.

Optionally, the second station information field including the second indication information further includes at least one of the following: a resource unit (resource unit, RU) allocation subfield, a codebook size subfield, a reserved field, and a number of columns subfield. The RU allocation subfield is 7 bits, 8 bits, or 9 bits. A start bit of the RU allocation subfield is B11 of the second station information field including the second indication information. The RU allocation subfield indicates an RU that feeds back a channel measurement result. The codebook size subfield is 1 bit that is located in B22 of the second station information field including the second indication information. The codebook size subfield indicates quantization accuracy. The number of columns subfield is 4 bits that are located in B28 to B31 of the second station information field including the second indication information. The number of columns subfield indicates a number of columns of a beamforming feedback matrix.

In this solution, B23 and B24 in a station information field are set to both 1, to indicate that the station information field is in an EHT format, so that station information fields in different formats (an HE format and an EHT format) are distinguished, and stations of different types can correctly interpret respective station information fields, to obtain respective channel sounding parameters.

In any design of any one of the foregoing aspects, the second indication information is 2 bits that are respectively located in B17 and B24 of the second station information field including the second indication information. When a value of B17 of the second station information field including the second indication information is 1 and a value of B24 is 0, it indicates that the second station information field including the second indication information is in the second format; or when a value of B17 of the second station information field including the second indication information is not 1 or a value of B24 is not 0, it indicates that the second station information field including the second indication information is in the first format.

Optionally, the second station information field including the second indication information further includes at least one of the following: a first RU allocation subfield, a second RU allocation subfield, a reserved field, a codebook size subfield, and a number of columns subfield. The first RU allocation subfield is 6 bits that are located in B11 to B16 of the second station information field including the second indication information. The second RU allocation subfield is 1 bit, 2 bits, or 3 bits. A start bit of the second RU allocation subfield is B18 of the second station information field including the second indication information. The first RU allocation subfield and the second RU allocation subfield jointly indicate an RU that feeds back a channel sounding result. The codebook size subfield is 1 bit that is located in B23 of the second station information field including the second indication information, and indicates quantization accuracy. The number of columns subfield is 4 bits that are located in B28 to B31 of the second station information field including the second indication information, and indicates a number of columns of a beamforming feedback matrix.

In this solution, B17 in a station information field is set to 1 and B24 is set to 0, to indicate that the station information field is in an EHT format, so that station information fields in different formats (an HE format and an EHT format) are distinguished, and stations of different types can correctly interpret respective station information fields, to obtain respective channel sounding parameters.

According to a seventh aspect, this application provides a channel sounding method. The method includes: An access point generates and sends an NDPA frame. The NDPA frame includes first indication information. The first indication information indicates that the NDPA frame includes at least three types of station information fields. A first-type station information field is in an HE format. Each second station information field in a second-type station information field includes second indication information. The second indication information indicates whether the second station information field including the second indication information is in a first format or a second format. Each third station information field in a third-type station information field includes third indication information. The third indication information indicates whether the third station information field including the third indication information is in a third format.

Optionally, the first format is an HE format, the second format is an EHT format, and the third format is an EHT next-generation protocol format.

In this solution, indication information is carried in the second-type station information field to indicate whether the station information field is in the HE format or the EHT format, and another piece of indication information is carried in the third-type station information field to indicate whether the station information field is in the EHT next-generation protocol format. In addition, still another piece of indication information in the NDPA frame indicates that the NDPA frame includes at least three types of station information fields, so that simultaneous channel sounding of an HE station, an EHT station, and an EHT+ station can be implemented, to support beamforming during aggregated packet transmission. It should be understood that the EHT+ station herein refers to a station that supports the EHT next-generation protocol format.

With reference to the seventh aspect, in a possible design, after the access point sends the NDPA frame, the method further includes: The access point sends an NDP, and sends a trigger frame, where the trigger frame is used to trigger a station to feed back a beamforming report.

With reference to the seventh aspect, in a possible design, a bandwidth of the NDP is 320 MHz. That the access point sends an NDP includes: The access point sends a 160 MHz HE NDP on a primary 160 MHz channel, and simultaneously/concurrently sends, on a secondary 160 MHz channel, an NDP obtained by performing phase rotation on the 160 MHz HE NDP.

In other words, the 320 MHz NDP includes two portions, where a first portion is a 160 MHz HE NDP, and a second portion is an NDP obtained by performing phase rotation on the 160 MHz HE NDP.

In this solution, sent NDPs are all in an HE format, to resolve time misalignment of different types of NDPs. This avoids interference during channel measurement.

According to an eighth aspect, this application provides a channel sounding method. The method includes: A second station (an EHT station) receives an NDPA frame, and determines, based on first indication information in the NDPA frame, that the NDPA frame includes at least three types of station information fields; and if determining that an association identifier in a second station information field of the NDPA frame is the same as an association identifier of the second station, the second station determines a format of the second station information field based on second indication information in the second station information field, and parses the second station information field based on the determined format. The NDPA frame includes first indication information. The first indication information indicates that the NDPA frame includes at least three types of station information fields. A first-type station information field is in an HE format. Each second station information field in a second-type station information field includes second indication information. The second indication information indicates whether the second station information field including the second indication information is in a first format or a second format. Each third station information field in a third-type station information field includes third indication information. The third indication information indicates whether the third station information field including the third indication information is in a third format.

Optionally, the first format is an HE format, the second format is an EHT format, and the third format is an EHT next-generation protocol format.

With reference to the eighth aspect, in a possible design, after the second station receives the NDPA frame, the method further includes: The second station receives an NDP, and obtains channel state information based on the NDP; the second station receives a trigger frame, where the trigger frame is used to trigger a station to feed back a beamforming report; and the second station sends the beamforming report, where the beamforming report is generated based on an indication in the second station information field of the NDPA frame, and the beamforming report carries the channel state information.

Optionally, a bandwidth of the NDP is 320 MHz. When receiving the NDP, the second station receives a 160 MHz HE NDP on a primary 160 MHz channel, and simultaneously/concurrently receives, on a secondary 160 MHz channel, an NDP obtained by performing phase rotation on the 160 MHz HE NDP.

In other words, the 320 MHz NDP includes two portions, where a first portion is a 160 MHz HE NDP, and a second portion is an NDP obtained by performing phase rotation on the 160 MHz HE NDP.

According to a ninth aspect, this application provides a channel sounding method. The method includes: A third station (an EHT+ station) receives an NDPA frame, and determines, based on first indication information in the NDPA frame, that the NDPA frame includes at least three types of station information fields; if determining that a third station information field of the NDPA frame is the same as an association identifier of the third station, the third station determines, based on third indication information in the third station information field, whether the third station information field is in a third format; and if determining that the third station information field is in the third format, the third station parses the third station information field based on the third format. The NDPA frame includes first indication information. The first indication information indicates that the NDPA frame includes at least three types of station information fields. A first-type station information field is in an HE format. Each second station information field in a second-type station information field includes second indication information. The second indication information indicates whether the second station information field including the second indication information is in a first format or a second format. Each third station information field in a third-type station information field includes third indication information. The third indication information indicates whether the third station information field including the third indication information is in a third format.

Optionally, the first format is an HE format, the second format is an EHT format, and the third format is an EHT next-generation protocol format.

With reference to the ninth aspect, in a possible design, after the third station receives the NDPA frame, the method further includes: The third station receives an NDP, and obtains channel state information based on the NDP; the third station receives a trigger frame, where the trigger frame is used to trigger a station to feed back a beamforming report; and the third station sends the beamforming report, where the beamforming report is generated based on an indication in the third station information field of the NDPA frame, and the beamforming report carries the channel state information.

Optionally, a bandwidth of the NDP is 320 MHz. When receiving the NDP, the third station receives a 160 MHz HE NDP on a primary 160 MHz channel, and simultaneously/concurrently receives, on a secondary 160 MHz channel, an NDP obtained by performing phase rotation on the 160 MHz HE NDP.

In other words, the 320 MHz NDP includes two portions, where a first portion is a 160 MHz HE NDP, and a second portion is an NDP obtained by performing phase rotation on the 160 MHz HE NDP.

According to a tenth aspect, this application provides a channel sounding method. The method includes: A first station (an HE station) receives an NDPA frame; the first station determines, based on first indication information in the NDPA frame, that the NDPA frame is an HE NDPA frame; and the first station determines that an association identifier in a first station information field of the NDPA frame is the same as an association identifier of the first station, and parses the first station information field based on an HE format. The NDPA frame includes first indication information. The first indication information indicates that the NDPA frame includes at least three types of station information fields. A first-type station information field is in an HE format. Each second station information field in a second-type station information field includes second indication information. The second indication information indicates whether the second station information field including the second indication information is in a first format or a second format. Each third station information field in a third-type station information field includes third indication information. The third indication information indicates whether the third station information field including the third indication information is in a third format.

Optionally, the first format is an HE format, the second format is an EHT format, and the third format is an EHT next-generation protocol format.

With reference to the tenth aspect, in a possible design, after the first station receives the NDPA frame, the method further includes: The first station receives an NDP, and obtains channel state information based on the NDP; the first station receives a trigger frame, where the trigger frame is used to trigger a station to feed back a beamforming report; and the first station sends the beamforming report, where the beamforming report is generated based on an indication in the first station information field of the NDPA frame, and the beamforming report carries the channel state information.

Optionally, a bandwidth of the NDP is 320 MHz. When receiving the NDP, the first station receives a 160 MHz HE NDP only on a primary 160 MHz channel.

According to an eleventh aspect, this application provides a communication apparatus. The communication apparatus is an access point or a chip in the access point, for example, a Wi-Fi chip. The communication apparatus includes a processing unit and a transceiver unit. The processing unit is configured to generate an NDPA frame. The NDPA frame includes first indication information. The first indication information indicates that the NDPA frame includes at least three types of station information fields. A first-type station information field is in an HE format. Each second station information field in a second-type station information field includes second indication information. The second indication information indicates whether the second station information field including the second indication information is in a first format or a second format. Each third station information field in a third-type station information field includes third indication information. The third indication information indicates whether the third station information field including the third indication information is in a third format. The transceiver unit is configured to send the NDPA frame.

Optionally, the first format is an HE format, the second format is an EHT format, and the third format is an EHT next-generation protocol format.

With reference to the eleventh aspect, in a possible design, the transceiver unit is further configured to send an NDP, and send a trigger frame, where the trigger frame is used to trigger a station to feed back a beamforming report. With reference to the eleventh aspect, in a possible design, a bandwidth of the NDP is 320 MHz. The transceiver unit is further configured to send a 160 MHz HE NDP on a primary 160 MHz channel, and simultaneously/concurrently send, on a secondary 160 MHz channel, an NDP obtained by performing phase rotation on the 160 MHz HE NDP. In other words, the 320 MHz NDP includes two portions, where a first portion is a 160 MHz HE NDP, and a second portion is an NDP obtained by performing phase rotation on the 160 MHz HE NDP.

According to a twelfth aspect, this application provides a communication apparatus. The communication apparatus is a second station or a chip in the second station, for example, a Wi-Fi chip. The communication apparatus includes a transceiver unit and a processing unit. The transceiver unit is configured to receive an NDPA frame. The NDPA frame includes first indication information. The first indication information indicates that the NDPA frame includes at least three types of station information fields. A first-type station information field is in an HE format. Each second station information field in a second-type station information field includes second indication information. The second indication information indicates whether the second station information field including the second indication information is in a first format or a second format. Each third station information field in a third-type station information field includes third indication information. The third indication information indicates whether the third station information field including the third indication information is in a third format. The processing unit is configured to determine, based on the first indication information, that the NDPA frame includes at least three types of station information fields. The processing unit is further configured to: if it is determined that an association identifier in a second station information field of the NDPA frame is the same as an association identifier of a second station, determine a format of the second station information field based on second indication information in the second station information field, and parse the second station information field based on the determined format. Optionally, the first format is an HE format, the second format is an EHT format, and the third format is an EHT next-generation protocol format.

With reference to the twelfth aspect, in a possible design, the transceiver unit is further configured to receive an NDP. The processing unit is further configured to obtain channel state information based on the NDP. The transceiver unit is further configured to receive a trigger frame, where the trigger frame is used to trigger a station to feed back a beamforming report. The transceiver unit is further configured to send a beamforming report, where the beamforming report is generated based on an indication in the second station information field of the NDPA frame, and the beamforming report carries the channel state information.

Optionally, a bandwidth of the NDP is 320 MHz. The transceiver unit is specifically configured to receive a 160 MHz HE NDP on a primary 160 MHz channel, and simultaneously/concurrently receive, on a secondary 160 MHz channel, an NDP obtained by performing phase rotation on the 160 MHz HE NDP.

In other words, the 320 MHz NDP includes two portions, where a first portion is a 160 MHz HE NDP, and a second portion is an NDP obtained by performing phase rotation on the 160 MHz HE NDP.

According to a thirteenth aspect, this application provides a communication apparatus. The communication apparatus is a third station or a chip in the third station, for example, a Wi-Fi chip. The communication apparatus includes a transceiver unit and a processing unit. The transceiver unit is configured to receive an NDPA frame. The NDPA frame includes first indication information. The first indication information indicates that the NDPA frame includes at least three types of station information fields. A first-type station information field is in an HE format. Each second station information field in a second-type station information field includes second indication information. The second indication information indicates whether the second station information field including the second indication information is in a first format or a second format. Each third station information field in a third-type station information field includes third indication information. The third indication information indicates whether the third station information field including the third indication information is in a third format. The processing unit is configured to determine, based on the first indication information, that the NDPA frame includes at least three types of station information fields. The processing unit is further configured to: if it is determined that a third station information field of the NDPA frame is the same as an association identifier of the third station, determine, based on third indication information in the third station information field, whether the third station information field is in a third format. The processing unit is further configured to: if it is determined that the third station information field is in the third format, parse the third station information field based on the third format.

Optionally, the first format is an HE format, the second format is an EHT format, and the third format is an EHT next-generation protocol format.

With reference to the thirteenth aspect, in a possible design, the transceiver unit is further configured to receive an NDP. The processing unit is further configured to obtain channel state information based on the NDP. The transceiver unit is further configured to receive a trigger frame, where the trigger frame is used to trigger a station to feed back a beamforming report. The transceiver unit is further configured to send a beamforming report, where the beamforming report is generated based on an indication in the third station information field of the NDPA frame, and the beamforming report carries the channel state information.

Optionally, a bandwidth of the NDP is 320 MHz. The transceiver unit is specifically configured to receive a 160 MHz HE NDP on a primary 160 MHz channel, and simultaneously/concurrently receive, on a secondary 160 MHz channel, an NDP obtained by performing phase rotation on the 160 MHz HE NDP.

In other words, the 320 MHz NDP includes two portions, where a first portion is a 160 MHz HE NDP, and a second portion is an NDP obtained by performing phase rotation on the 160 MHz HE NDP.

According to a fourteenth aspect, this application provides a communication apparatus. The communication apparatus is a first station or a chip in the first station, for example, a Wi-Fi chip. The communication apparatus includes a transceiver unit and a processing unit. The transceiver unit is configured to receive an NDPA frame. The NDPA frame includes first indication information. The first indication information indicates that the NDPA frame includes at least three types of station information fields. A first-type station information field is in an HE format. Each second station information field in a second-type station information field includes second indication information. The second indication information indicates whether the second station information field including the second indication information is in a first format or a second format. Each third station information field in a third-type station information field includes third indication information. The third indication information indicates whether the third station information field including the third indication information is in a third format. The processing unit is configured to determine the NDPA frame as an HE NDPA frame based on the first indication information in the NDPA frame. The processing unit is further configured to: if it is determined that an association identifier in a first station information field of the NDPA frame is the same as an association identifier of the first station, parse the first station information field based on an HE format.

With reference to the fourteenth aspect, in a possible design, the transceiver unit is further configured to receive an NDP. The processing unit is further configured to obtain channel state information based on the NDP. The transceiver unit is further configured to receive a trigger frame, where the trigger frame is used to trigger a station to feed back a beamforming report. The transceiver unit is further configured to send a beamforming report, where the beamforming report is generated based on an indication in the first station information field of the NDPA frame, and the beamforming report carries the channel state information.

Optionally, a bandwidth of the NDP is 320 MHz. The transceiver unit is specifically configured to receive a 160 MHz HE NDP only on a primary 160 MHz channel.

In any design of any one of the foregoing aspects, if the bandwidth of the NDP is less than or equal to 160 MHz, the NDP is an HE NDP.

In any design of any one of the foregoing aspects, the first indication information is B0 whose value is 0 and B 1 whose value is 1 in a sounding dialog token field.

In any design of any one of the foregoing aspects, the second indication information is 2 bits that are respectively located in B23 and B24 of the second station information field including the second indication information. When values of B23 and B24 of the second station information field including the second indication information are both 1, it indicates that the second station information field including the second indication information is in the second format; or when values of B23 and B24 of the second station information field including the second indication information are not both 1, it indicates that the second station information field including the second indication information is in the first format.

In any design of any one of the foregoing aspects, the third indication information is 2 bits that are respectively located in B23 and B24 of the third station information field including the third indication information. When values of B23 and B24 of the third station information field including the third indication information are both 1, it indicates that the third station information field including the third indication information is in the third format; or when values of B23 and B24 of the third station information field including the third indication information are not both 1, it indicates that the third station information field including the third indication information is not in the third format.

Optionally, the second station information field including the second indication information or the third station information field including the third indication information further includes at least one of the following: an RU allocation subfield, a codebook size subfield, a reserved field, and a number of columns subfield. The RU allocation subfield is 7 bits, 8 bits, or 9 bits. A start bit of the RU allocation subfield is B 11 of the second station information field including the second indication information or the third station information field including the third indication information. The RU allocation subfield indicates an RU that feeds back a channel measurement result. The codebook size subfield is 1 bit that is located in B22 of the second station information field including the second indication information or the third station information field including the third indication information. The codebook size subfield indicates quantization accuracy. The number of columns subfield is 4 bits that are located in B28 to B31 of the second station information field including the second indication information or the third station information field including the third indication information. The number of columns subfield indicates a number of columns of a beamforming feedback matrix.

In this solution, B23 and B24 in a station information field are designed, to distinguish a format of the station information field, so that station information fields in different formats are distinguished, and stations of different types can correctly interpret respective station information fields, to obtain respective channel sounding parameters. In any design of any one of the foregoing aspects, the second indication information is 2 bits that are respectively located in B 17 and B24 of the second station information field including the second indication information. When a value of B 17 of the second station information field including the second indication information is 1 and a value of B24 is 0, it indicates that the second station information field including the second indication information is in the second format; or when a value of B 17 of the second station information field including the second indication information is not 1 or a value of B24 is not 0, it indicates that the second station information field including the second indication information is in the first format.

In any design of any one of the foregoing aspects, the third indication information is 2 bits that are respectively located in B 17 and B24 of the third station information field including the third indication information. When a value of B 17 of the third station information field including the third indication information is 1 and a value of B24 is 0, it indicates that the third station information field including the third indication information is in the third format; or when a value of B 17 of the third station information field including the third indication information is not 1 or a value of B24 is not 0, it indicates that the third station information field including the third indication information is not in third first format.

Optionally, the second station information field including the second indication information or the third station information field including the third indication information further includes at least one of the following: a first RU allocation subfield, a second RU allocation subfield, a reserved field, a codebook size subfield, and a number of columns subfield. The first RU allocation subfield is 6 bits that are located in B11 to B16 of the second station information field including the second indication information or the third station information field including the third indication information. The second RU allocation subfield is 1 bit, 2 bits, or 3 bits. A start bit of the second RU allocation subfield is B18 of the second station information field including the second indication information or the third station information field including the third indication information. The first RU allocation subfield and the second RU allocation subfield jointly indicate an RU that feeds back a channel sounding result. The codebook size subfield is 1 bit that is located in B23 of the second station information field including the second indication information or the third station information field including the third indication information, and indicates quantization accuracy. The number of columns subfield is 4 bits that are located in B28 to B31 of the second station information field including the second indication information or the third station information field including the third indication information, and indicates a number of columns of a beamforming feedback matrix.

In this solution, B17 and B24 in a station information field are designed, to distinguish a format of the station information field, so that station information fields in different formats are distinguished, and stations of different types can correctly interpret respective station information fields, to obtain respective channel sounding parameters. It should be understood that when the second indication information is B23 and B24 in the station information field, the third indication information is B17 and B24 in the station information field; or when the second indication information is B17 and B24 in the station information field, the third indication information is B23 and B24 in the station information field.

In any design of any one of the foregoing aspects, when the third indication information indicates that the station information field including the third indication information is not in the third format, the station information field including the third indication information further includes fourth indication information, and the fourth indication information indicates whether the station information field including the third indication information is in the first format or the second format.

In this solution, when the third indication information indicates that the format is not an EHT+ format, another piece of indication information is carried to indicate whether the format is an HE format or an EHT format, so that the EHT+ station selects a correct format to interpret a station information field of the EHT+ station.

Optionally, for the third station, the channel sounding method further includes: If it is determined that the third station information field is not in the third format, the third station determines a format of the third station information field based on the fourth indication information included in the third station information field, and parses the third station information field based on the determined format, where the fourth indication information indicates whether the third station information field including the third indication information is in the first format or the second format.

In any design of any one of the foregoing aspects, the fourth indication information is B 17 and B24 of the third station information field including the third indication information. When a value of B 17 of the third station information field including the third indication information is 1 and a value of B24 is 0, it indicates that the third station information field including the third indication information is in the second format; or when a value of B 17 of the third station information field including the third indication information is not 1 or a value of B24 is not 0, it indicates that the third station information field including the third indication information is in the first format.

In any design of any one of the foregoing aspects, the fourth indication information is B23 and B24 of the third station information field including the third indication information. When a value of B23 of the third station information field including the third indication information is 1 and a value of B24 is 1, it indicates that the third station information field including the third indication information is in the second format; or when a value of B23 of the third station information field including the third indication information is not 1 or a value of B24 is not 1, it indicates that the third station information field including the third indication information is in the first format.

It should be understood that when the third indication information is B23 and B24 in the station information field, the fourth indication information is B 17 and B24 in the station information field; or when the third indication information is B17 and B24 in the station information field, the fourth indication information is B23 and B24 in the station information field.

In this solution, B 17, B23, and B24 in a station information field are designed, to distinguish a format of the station information field, so that station information fields in different formats (an HE format, an EHT format, and an EHT next-generation protocol format) are distinguished, and stations of different types can correctly interpret respective station information fields, to obtain respective channel sounding parameters.

According to a fifteenth aspect, this application provides a communication apparatus. The communication apparatus is specifically an access point, and includes a processor and a transceiver. The processor and the transceiver are configured to perform the method according to the first aspect or the seventh aspect.

According to a sixteenth aspect, this application provides a communication apparatus. The communication apparatus is specifically a second station, and includes a processor and a transceiver. The processor and the transceiver are configured to perform the method according to the second aspect or the eighth aspect.

According to a seventeenth aspect, this application provides a communication apparatus. The communication apparatus is specifically a third station, and includes a processor and a transceiver. The processor and the transceiver are configured to perform the method according to the ninth aspect.

According to an eighteenth aspect, this application provides a communication apparatus. The communication apparatus is specifically a first station, and includes a processor and a transceiver. The processor and the transceiver are configured to perform the method according to the third aspect or the tenth aspect.

According to a nineteenth aspect, this application provides a communication apparatus. The communication apparatus may exist in a product form of a chip, and a structure of the communication apparatus includes an input/output interface and a processing circuit. The input/output interface and the processing circuit are configured to perform the method according to any one of the first aspect to the third aspect or any one of the seventh aspect to the tenth aspect. According to a twentieth aspect, this application provides a computer-readable storage medium, where the computer-readable storage medium stores program instructions. When the program instructions are run on a computer, the computer is enabled to perform the method according to any one of the first aspect to the third aspect or any one of the seventh aspect to the tenth aspect.

According to a twenty-first aspect, this application provides a computer program product including program instructions. When the computer program product runs on a computer, the computer is enabled to perform the method according to any one of the first aspect to the third aspect or any one of the seventh aspect to the tenth aspect. According to embodiments of this application, the HE station and the EHT station may be notified to simultaneously perform channel sounding, to support beamforming during aggregated packet transmission.

**BRIEF DESCRIPTION OF DRAWINGS**

To describe the technical solutions in embodiments of this application more clearly, the following briefly describes the accompanying drawings used for describing the embodiments.

FIG. 1 is a schematic diagram of an architecture of a wireless communication system according to an embodiment of this application;

FIG. 2a is a schematic diagram of a structure of an access point according to an embodiment of this application;

FIG. 2b is a schematic diagram of a structure of a station according to an embodiment of this application;

FIG. 3 is a schematic flowchart of channel sounding in the 802.11ac;

FIG. 4 is a schematic diagram of a frame structure of a VHT NDPA frame;

FIG. 5 is a schematic diagram of a frame structure of a VHT MIMO control field;

FIG. 6a is a schematic flowchart of single-user/STA channel sounding in the 802.11ax;

FIG. 6b is a schematic flowchart of multi-user/STA channel sounding in the 802.11ax;

FIG. 7 is a schematic diagram of a frame structure of an HE NDPA frame;

FIG. 8 is a schematic diagram of a frame structure of an HE NDP;

FIG. 9 is a schematic diagram of a frame structure of an HE MIMO field;

FIG. 10 is a schematic diagram of a frame structure of a sounding dialog token field of an NDPA frame;

FIG. 11 is a schematic diagram in which a VHT station reads an HE NDPA frame;

FIG. 12 is a schematic diagram of an aggregated PPDU;

FIG. 13 is a schematic diagram of a frame structure of an EHT NDP;

FIG. 14A and FIG. 14B show a schematic flowchart of a channel sounding method according to an embodiment of this application;

FIG. 15 is a schematic diagram of an 80 MHz tone plan (tone plan) in the 802.11be standard;

FIG. 16a is a schematic diagram of an EHT station information field according to an embodiment of this application;

FIG. 16b is another schematic diagram of an EHT station information field according to an embodiment of this application;

FIG. 17 is a schematic diagram of a time sequence of a channel sounding method according to an embodiment of this application;

FIG. 18A, FIG. 18B, and FIG. 18C show another schematic flowchart of a channel sounding method according to an embodiment of this application;

FIG. 19 is a schematic diagram of another time sequence of a channel sounding method according to an embodiment of this application;

FIG. 20 is a schematic diagram of a structure of a communication apparatus 1 according to an embodiment of this application; and

FIG. 21 is a schematic diagram of a structure of a communication apparatus 2 according to an embodiment of this application.

**DESCRIPTION OF EMBODIMENTS**

The following clearly and completely describes the technical solutions in embodiments of this application with reference to the accompanying drawings in embodiments of this application.

For ease of understanding the method provided in embodiments of this application, the following describes a system architecture and/or an application scenario of the method provided in embodiments of this application. It may be understood that the system architecture and/or the application scenario described in embodiments of this application are/is intended to describe the technical solutions in embodiments of this application more clearly, and do/does not constitute a limitation on the technical solutions provided in embodiments of this application.

An embodiment of this application provides a channel sounding method. Indication information is carried in a station information field of an NDPA frame, to indicate a format of the station information field. A ranging (Ranging) bit of a sounding dialog token field of the NDPA frame is set to 0, and an HE bit is set to 1, so that a conventional HE station is deceived and considers a format of the NDPA frame as an HE format, to notify an HE station and an EHT station to simultaneously perform channel sounding, to support beamforming during aggregated packet transmission. The channel sounding method may be applied to a wireless communication system, for example, a wireless local area network system. The channel sounding method may be implemented by a communication device in the wireless communication system or a chip or a processor in the communication device. The communication device may be an access point device or a station device. Alternatively, the communication device may be a wireless communication device that supports concurrent transmission on a plurality of links. For example, the communication device may be referred to as a multi-link device (multi-link device, MLD) or a multi-band device. Compared with a communication device that supports only single-link transmission, the multi-link device has higher transmission efficiency and a higher throughput.

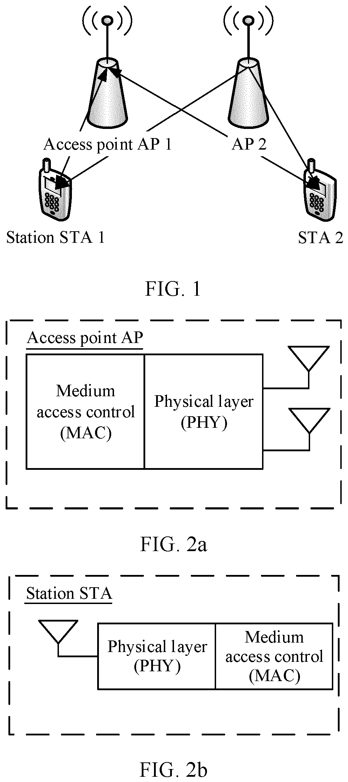

The channel sounding method provided in this embodiment of this application may be applied to a scenario of communication between one or more nodes and one or more other nodes, and is mainly applied to a scenario of communication between an AP and a STA, but is also applicable to a scenario of communication between APs, and is also applicable to a scenario of communication between STAs. FIG. 1 is a schematic diagram of an architecture of a wireless communication system according to an embodiment of this application. As shown in FIG. 1, the wireless communication system may include one or more APs (for example, an AP 1 and an AP 2 in FIG. 1) and one or more STAs (for example, a STA 1 and a STA 2 in FIG. 1). Among the two stations shown in FIG. 1, one may be an HE station, and the other may be an EHT station. Both the AP and the STA support a WLAN communication protocol.

The communication protocol may include the 802.11be (or referred to as the Wi-Fi 7, the EHT protocol), and may further include protocols such as the 802.11ax and the 802.11ac. Certainly, with continuous evolution and development of communication technologies, the communication protocol may further include a next-generation protocol of the 802.11be and the like. A WLAN is used as an example. An apparatus for implementing the method in this application may be an AP or a STA in the WLAN, or a chip or a processing system disposed in the AP or the STA.

An access point (for example, the AP 1 or the AP 2 in FIG. 1) is an apparatus having a wireless communication function, supports communication by using a WLAN protocol, has a function of communicating with another device (for example, a station or another access point) in a WLAN, and certainly, may further have a function of communicating with another device. In a WLAN system, an access point may be referred to as an access point station (AP STA). The apparatus having the wireless communication function may be an entire device, or may be a chip or a processing system installed in the entire device. The device in which the chip or the processing system is installed may implement the method and the function in embodiments of this application under control of the chip or the processing system. The AP in embodiments of this application is an apparatus providing a service for the STA, and may support the 802.11 series protocols. For example, the AP may be a communication entity, for example, a communication server, a router, a switch, or a bridge. The AP may include a macro base station, a micro base station, and a relay station in various forms. Certainly, the AP may alternatively be a chip or a processing system in these devices in various forms, to implement the method and the function in embodiments of this application.

A station (for example, a STA 1 and a STA 2 in FIG. 1) is an apparatus having a wireless communication function, supports communication by using a WLAN protocol, and has a capability of communicating with another station or an access point in a WLAN. In the WLAN system, a station may be referred to as a non-access point station (non-access point station, non-AP STA). For example, the STA is any user communication device that allows a user to communicate with an AP and further communicate with a WLAN. The apparatus having the wireless communication function may be an entire device, or may be a chip or a processing system installed in the entire device. The device in which the chip or the processing system is installed may implement the method and the function in embodiments of this application under control of the chip or the processing system. For example, the STA may be user equipment that can connect to the internet, for example, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), or a mobile phone. Alternatively, the STA may be an internet of things node in the internet of things, an in-vehicle communication apparatus in the internet of vehicles, an entertainment device, a game device or system, or a global positioning system device. The STA may alternatively be a chip and a processing system in the foregoing terminals.

The WLAN system can provide high-speed and low-latency transmission. With continuous evolution of WLAN application scenarios, the WLAN system is to be applied to more scenarios or industries, for example, the internet of things industry, the internet of vehicles industry, the banking industry, enterprise offices, exhibition halls of stadiums, concert halls, hotel rooms, dormitories, wards, classrooms, supermarkets, squares, streets, production workshops and warehousing. Certainly, a device (such as an access point or a station) that supports WLAN communication may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in the internet of things, an entertainment terminal (for example, an AR, a VR, or another wearable device), a smart device in smart office (for example, a printer, a projector, a loudspeaker, or a stereo), an internet of vehicles device in the internet of vehicles, an infrastructure (for example, a vending machine, a self-service navigation station of a supermarket, a self-service cash register device, or a self-service ordering machine) in daily life scenarios, a device in a large sports and music venue, and the like. Specific forms of the STA and the AP are not limited in embodiments of this application, and are merely examples for description herein.

The 802.11 standard focuses on a physical layer (physical layer, PHY) and a media access control (media access control, MAC) layer. In an example, FIG. 2a is a schematic diagram of a structure of an access point according to an embodiment of this application. The AP may have a plurality of antennas/radio frequencies, or may have a single antenna/radio frequency. The antenna/radio frequency is used to send/receive a data packet. In an implementation, an antenna or a radio frequency part of the AP may be separately disposed from a main body of the AP. In FIG. 2a, the AP may include a physical layer processing circuit and a media access control layer processing circuit. The physical layer processing circuit may be configured to process a physical layer signal, and the MAC layer processing circuit may be configured to process a MAC layer signal. In another example, FIG. 2b is a schematic diagram of a structure of a station according to an embodiment of this application. FIG. 2b is a schematic diagram of a structure of a single-antenna/radio frequency STA. In an actual scenario, the STA may alternatively be a multi-antenna/radio frequency STA, or may be a device with more than two antennas. The antenna/radio frequency is used to send/receive a data packet. In an implementation, an antenna or a radio frequency part of the STA may be separately disposed from a main body of the STA. In FIG. 2b, the STA may include a PHY processing circuit and a MAC processing circuit. The physical layer processing circuit may be configured to process a physical layer signal, and the MAC layer processing circuit may be configured to process a MAC layer signal.

The foregoing content briefly describes the system architecture in embodiments of this application. To better understand the technical solutions in embodiments of this application, the following describes content related to embodiments of this application.

1. Channel sounding in the 802.11ac

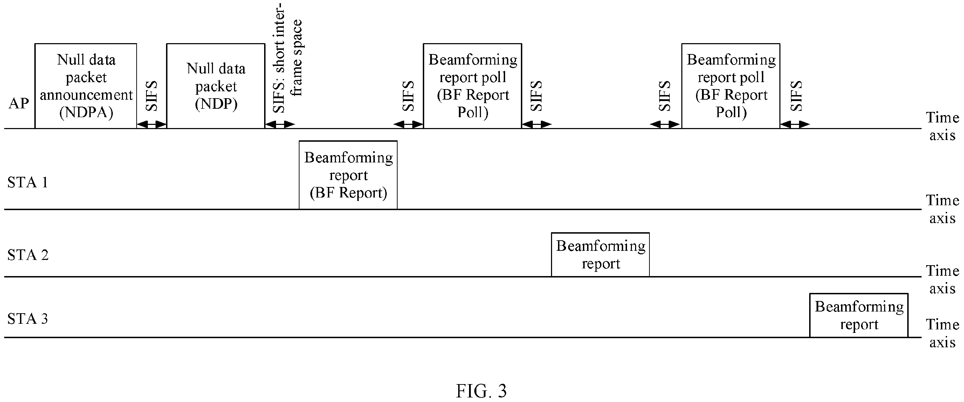

The 802.11ac standard is also referred to as the very high throughput (Very High Throughput, VHT) standard. A station that supports the 802.11 ac standard but does not support the 802.11ax standard is briefly referred to as a VHT station below. FIG. 3 is a schematic flowchart of channel sounding in the 802. 11ac. As shown in FIG. 3, an AP (as a channel sounding initiator, which may be referred to as a beamformer, BFer for short) sends a null data packet announcement (null data packet announcement, NDPA) frame to notify a STA (as a channel sounding responder, which may be referred to as a beamformee, BFee) that needs to perform channel sounding. The AP sends a related channel sounding parameter. Then, the AP sends a null data packet (null data packet, NDP) after a short inter-frame space (short inter-frame space, SIFS). The STA performs channel estimation based on the NDP, and then feeds back channel state information (Channel State Information, CSI) by using a beamforming report (Beamforming Report, BF Report). Then, the AP may send a beamforming report poll (BF Report Poll) frame to a STA to request channel state information that has not been fed back or that has been incorrectly fed back. It should be understood that the NDP refers to a data packet that has no data field portion and does not carry a MAC frame.

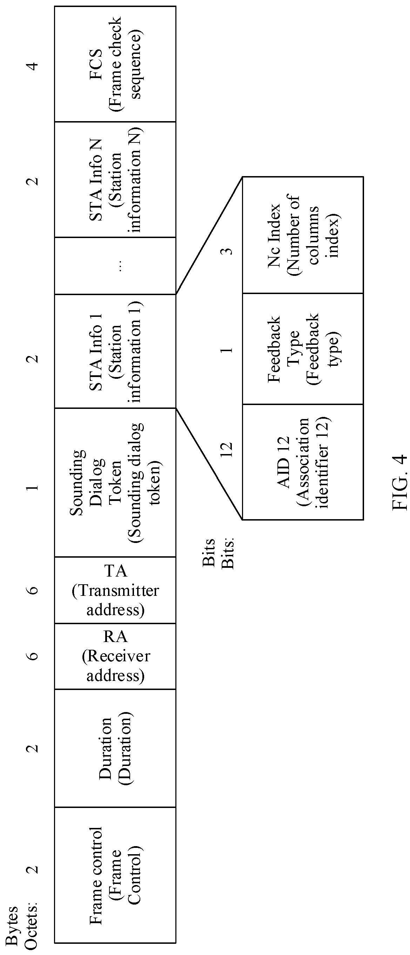

The following describes frame structures of some frames in FIG. 3. First, the NDPA frame is described. The NDPA frame has different variants (Variant) in different standards. The NDPA frame in the 802.11ac is generally referred to as a VHT NDPA frame. A frame type subfield and a subtype subfield exist in a frame control field of an NDPA frame, to indicate that the frame is an NDPA frame (the frame type subfield is set to 01, to indicate a control frame; and the subtype subfield is set to 0101, to indicate an NDPA frame in the control frame). FIG. 4 is a schematic diagram of a frame structure of a VHT NDPA frame. As shown in FIG. 4, a sounding dialog token (Sounding Dialog Token) field of the VHT NDPAframe is used to index a channel sounding sequence number. The VHT NDPAframe further includes station information (STA information) fields of one or more STAs. Each station information field is 2 bytes. Each station information field includes a station association identifier 11 (Association Identifier 11, AID11) subfield, a feedback type (Feedback Type) subfield, and a number of columns (Number of columns, Nc) index subfield. The AID 11 subfield identifies an associated station. In other words, AID 11 indicates a STA that needs to perform channel sounding. The feedback type subfield indicates whether feedback is single-user feedback or multi-user feedback. The number of columns index subfield indicates a number of columns for feedback. In addition, the VHT NDPA frame further includes a frame control (Frame Control, FC) field, a receiver address (Receiving Address, RA) field, a transmitter address (Transmitting Address, TA) field, and the like that are usually included in a MAC frame, where the RA field and the TA field are respectively used to identify a receive end and a transmit end of the MAC frame. A beamforming report frame is an action no acknowledgment (Action no ACK) frame. The frame may include content described in Table 1.

Table 1

| Order | Information |
|---|---|
| 1 | Category (Category) |

(continued)

| Order | Information |
|-------|-------------|
| 2 | VHT Action (VHT action) |
| 3 | VHT MIMO (Multiple Input Multiple Output, multiple input multiple output) control (control) |
| 4 | VHT Compressed Beamforming Report (VHT compression beamforming report) |
| 5 | MU Exclusive Beamforming Report (Multiple User, multi-user exclusive beamforming report) |

The category indicates a category of the action no acknowledgment frame. The VHT action indicates a subtype. The VHT MIMO control indicates parameter information of a subsequent beamforming report. The VHT compressed beamforming report and the multi-user exclusive beamforming report include corresponding channel state feedback information.

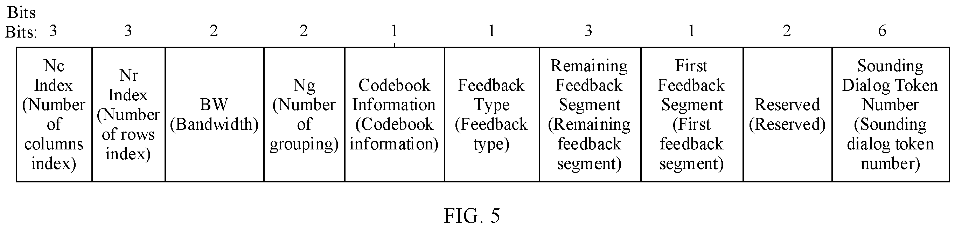

FIG. 5 is a schematic diagram of a frame structure of a VHT MIMO control field. As shown in FIG. 5, the VHT MIMO control field includes a remaining feedback segment (remaining feedback segment) subfield for indicating a quantity of beamforming report segments that have not been fed back by a station.

2. Channel sounding in the 802.11ax

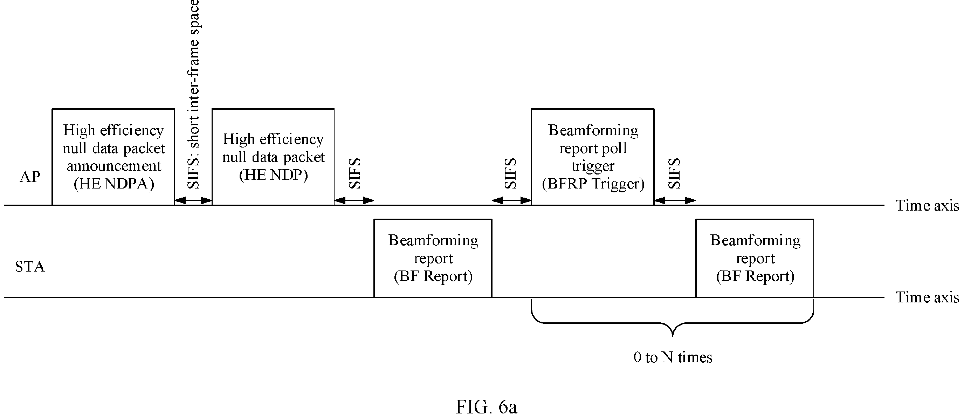

In the 802.11ax, a single-user channel sounding procedure of the 802.11ac is reserved. FIG. 6a is a schematic flowchart of single-user/STA channel sounding in the 802.11ax. As shown in FIG. 6a, an AP sends a high efficiency (high efficient, HE) NDPA frame (an NDPA frame in the 802. 11ax is usually referred to as an HE NDPA frame), to notify a STA that needs to perform channel sounding. The AP sends a related channel sounding parameter. Then, the AP sends an HE NDP after one SIFS. The STA performs channel estimation based on the HE NDP, and then feeds back CSI by using a beamforming report. Optionally, if the STA cannot feed back the entire beamforming report to the AP at a time, the STA needs to divide the entire beamforming report into a maximum of eight segments (Segment), and the STA feeds back a remaining segment quantity to the AP in each feedback. Therefore, the AP may further send a beamforming report poll (BF Report Poll, BFRP) trigger frame to request, from the STA, beamforming report segments that have not been fed back yet.

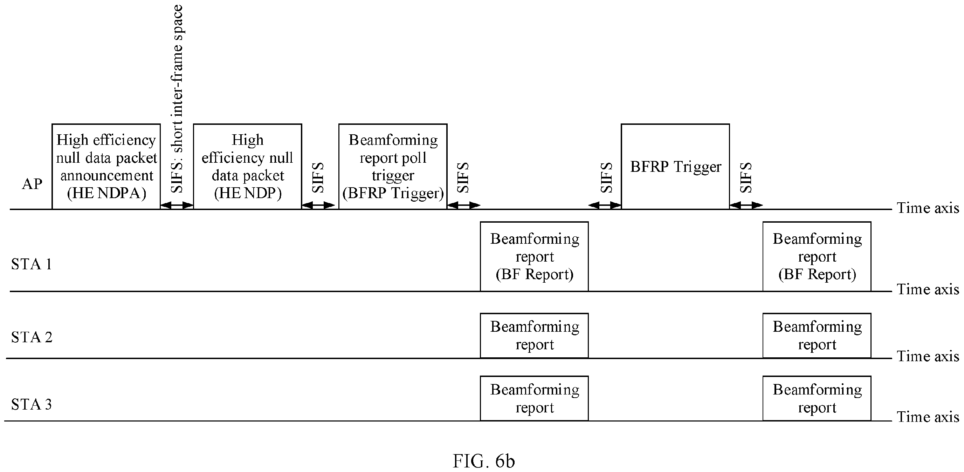

To further improve channel sounding efficiency, the 802.11ax introduces a trigger-based (Trigger) multi-user uplink transmission mechanism in a channel sounding process. In other words, an AP sends a trigger frame to trigger a plurality of STAs to simultaneously perform uplink multi-user transmission. Specifically, FIG. 6b is a schematic flowchart of multi-user/STA channel sounding in the 802.11ax. As shown in FIG. 6b, an AP sends an HE NDPA frame to notify a STA (for example, a STA 1, a STA 2, and a STA 3 in FIG. 6b) that needs to perform channel sounding. The AP sends a related channel sounding parameter. Then, the AP sends an HE NDP after one SIFS. Then, after one SIFS, the AP sends a BFRP trigger frame, so that a plurality of STAs that need to perform channel sounding are triggered to simultaneously/concurrently feed back beamforming reports. After another SIFS, the STAs that need to perform channel sounding simultaneously/concurrently feed back the beamforming reports to the AP. Optionally, the AP may send a BFRP trigger frame again to request, from the STA, channel state information that has been incorrectly fed back.

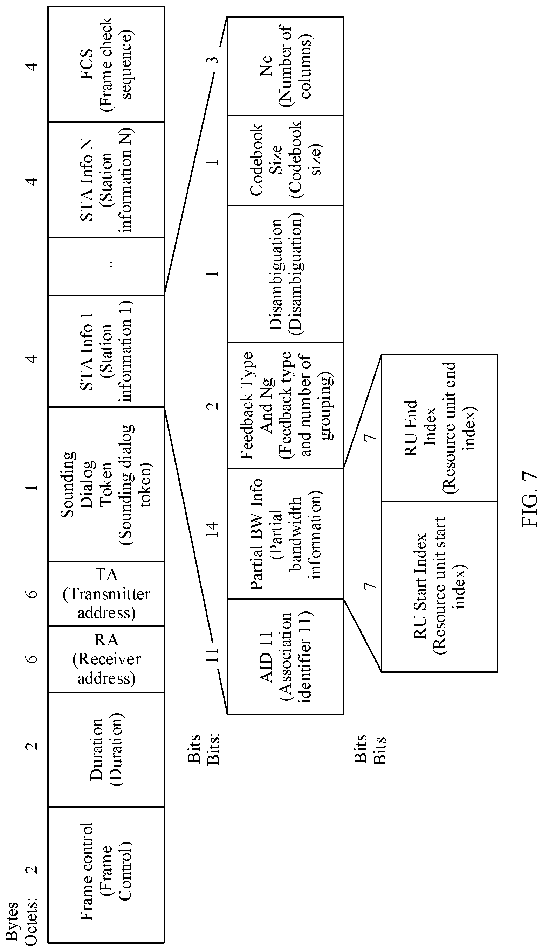

Optionally, the HE NDPA frame still uses a type and a subtype of the VHT NDPAframe. FIG. 7 is a schematic diagram of a frame structure of an HE NDPA frame. As shown in FIG. 7, compared with a VHT NDPA frame, a station information field of the HE NDPA frame is extended to 4 bytes, and a partial bandwidth information (Partial BW Info, Partial Bandwidth Information) subfield is introduced to indicate channel state information of a feedback portion of bandwidth to a STA. The feedback portion is a contiguous segment of RU indicated by a resource unit (Resource Unit, RU) start index (Start Index) to a resource unit end index (End Index). The 802.11ax supports a maximum bandwidth of 160 MHz and consists of 74 26-tone RUs (resource elements of 26 subcarriers). Therefore, seven bits are needed to indicate which one of the 74 26-tone RUs is used to start the CSI of the feedback portion of the bandwidth, and the other seven bits indicate which one of the 74 26-tone RUs is used to end the CSI of the feedback portion of the bandwidth. In other words, the RU Start Index subfield in the Partial BW Info subfield indicates the first 26-tone RU for which the HE beamformer is requesting feedback. The RU End Index subfield of the Partial BW Info subfield indicates the last 26-tone RU for which the HE beamformer is requesting feedback. (The RU Start Index subfield in the Partial BW Info subfield indicates the first 26-tone RU for which the HE beamformer is requesting feedback. The RU End Index subfield of the Partial BW Info subfield indicates the last 26-tone RU for which the HE beamformer is requesting feedback.) It should be understood that the value of the RU Start Index subfield is less than or equal to the value of the RU End Index subfield. (The value of the RU Start Index subfield is less than or equal to the value of the RU End Index subfield.)

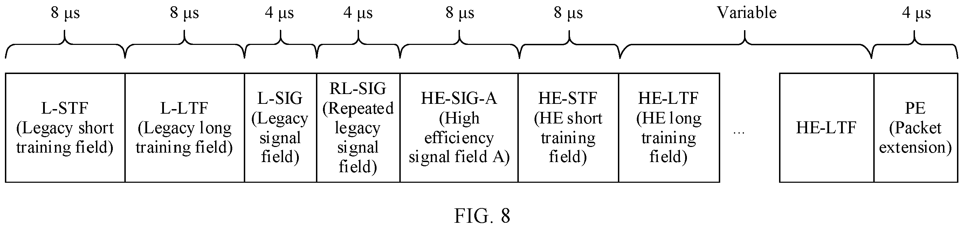

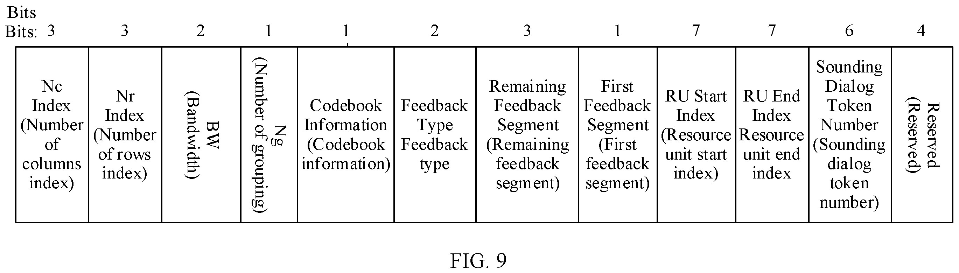

A feedback type and number of grouping (Number of grouping, Ng) subfield in the station information field indicates whether feedback is single-user feedback or multi-user feedback, and indicates a number of grouping for feedback. The number of grouping (Ng) indicates how many subcarriers are grouped into one group, and the group of subcarriers only needs to feed back channel state information in a unified manner. This reduces feedback compression. The codebook size (codebook size) subfield indicates quantization accuracy. Different accuracy corresponds to different overheads. The number of columns (Nc) subfield indicates a number of columns of a beamforming feedback matrix. In the 802.11ax, a maximum of eight antennas are defined on a STA side, and a maximum of eight data streams are supported. Therefore, three bits are needed to indicate that a number of columns for feedback is a value from 1 to 8. Optionally, FIG. 8 is a schematic diagram of a frame structure of an HE NDP. As shown in FIG. 8, the HE NDP includes a legacy short training field, a legacy long training field, a legacy signal field, a repeated legacy signal field, a high efficiency signal field A, an HE short training field, an HE long training field, and a data packet extension field. Optionally, in the 802.11ax, a frame that carries channel state information is referred to as a high efficiency compressed beamforming and channel quality information report (HE compressed beamforming and CQI report) frame, which is briefly referred to as a beamforming report in this specification and includes an HE multiple-input multiple-output (Multiple Input Multiple Output, MIMO) field and a beamforming report field. FIG. 9 is a schematic diagram of a frame structure of an HE MIMO field. As shown in FIG. 9, the HE MIMO field includes a remaining feedback segment (remaining feedback segment) subfield for indicating a quantity of beamforming report segments that have not been fed back by a station. The HE MIMO field further includes an RU start index and an RU end index, to indicate which one of the 74 26-tone RUs is used to start and which one is used to end the beamforming report segments in the current feedback. Optionally, in the 802.11ax, the HE compressed beamforming and CQI report frame may further feed back channel quality information (Channel Quality Information, CQI) in addition to the CSI. The channel quality information includes only signal-to-noise ratio information.

3. Channel sounding in the 802.11az

The 802.11az standard is used for ranging (Ranging). An NDPA frame in the 802.11az standard is referred to as a ranging NDPA frame, which inherits a type and a subtype of the VHT NDPA frame and has a frame format similar to that of the HE NDPA frame. A station information field is 4 bytes. A specific frame format of the ranging NDPA frame is not described herein again.

In conclusion, the NDPA frame has different variants (Variant) in different standards. Each next-generation 802.11 standard is compatible with a previous-generation 802.11 standard. Therefore, different variants need to be distinguished at a receive end. The following describes how a transmit end of an NDPA frame enables a receive end to distinguish NDPA frames of different standards by using an indication, and how to prevent an STA of an earlier version from misreading an NDPA frame of a new version.

Specifically, in the VHT standard phase, because only one variant NDPA frame exists (in other words, only the VHT NDPA frame exists), a VHT station does not need to distinguish the variant NDPA frame. In the HE standard phase, an HE indication is introduced into a second bit of a 1-byte sounding dialog token field of an NDPA frame, to indicate whether the NDPA frame is an HE NDPA frame. This bit is used to distinguish between a VHT NDPA frame and an HE NDPA frame. Because an HE station can read two types of NDPA frames at the same time, the HE station may identify whether the frame is a VHT NDPA frame or an HE NDPA frame by using the indication in the second bit of the sounding dialog token field. However, the VHT station cannot distinguish, and considers an HE NDPA frame as a VHT NDPA frame.

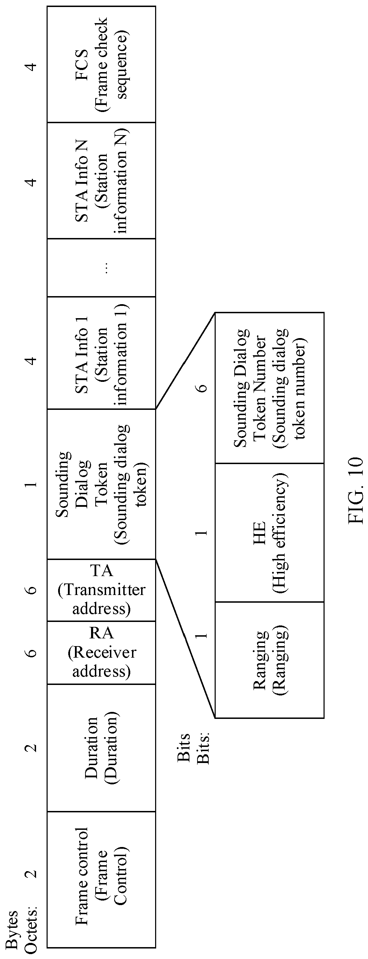

In the 802.11az standard phase, namely, a ranging standard phase, a ranging (ranging) indication is introduced into a first bit of a 1-byte sounding dialog token field, to indicate whether the NDPA frame is a ranging NDPA frame. For a station that supports a ranging standard, a first bit and a second bit of the sounding dialog token field are jointly used to distinguish whether the NDPA frame is a VHT NDPA frame, an HE NDPA frame, or a ranging NDPA frame. The VHT station still cannot distinguish, and considers a ranging NDPA frame as a VHT NDPA frame. The HE station does not identify whether the NDPA frame is a ranging NDPA frame, and only identifies, based on the second bit of the sounding dialog token field, whether the NDPA frame is a VHT NDPA frame or an HE NDPA frame. FIG. 10 is a schematic diagram of a frame structure of a sounding dialog token field of an NDPA frame. As shown in FIG. 10, the sounding dialog token field includes a 1-bit ranging subfield and a 1-bit high efficiency subfield. Table 2 describes correspondences between values and meanings of a first bit (the ranging subfield) and a second bit (the HE subfield) of the sounding dialog token field. As described in Table 2, when the values of the first two bits of the sounding dialog token field are "00", it indicates a VHT NDPA frame; when the values of the first two bits of the sounding dialog token field are "01", it indicates an HE NDPA frame; when the values of the first two bits of the sounding dialog token field are "10", it indicates a ranging NDPA frame; and when the values of the first two bits of the sounding dialog token field are " 11", it indicates undefined. Therefore, it may be learned from Table 2 that the HE station considers a ranging NDPA frame as a VHT NDPA frame.

**Table 2**

| Ranging (ranging) | HE (high efficiency) | Variant (variant) |
| --- | --- | --- |
| 0 | 0 | VHT |
| 0 | 1 | HE |
| 1 | 0 | Ranging |
| 1 | 1 | Undefined |

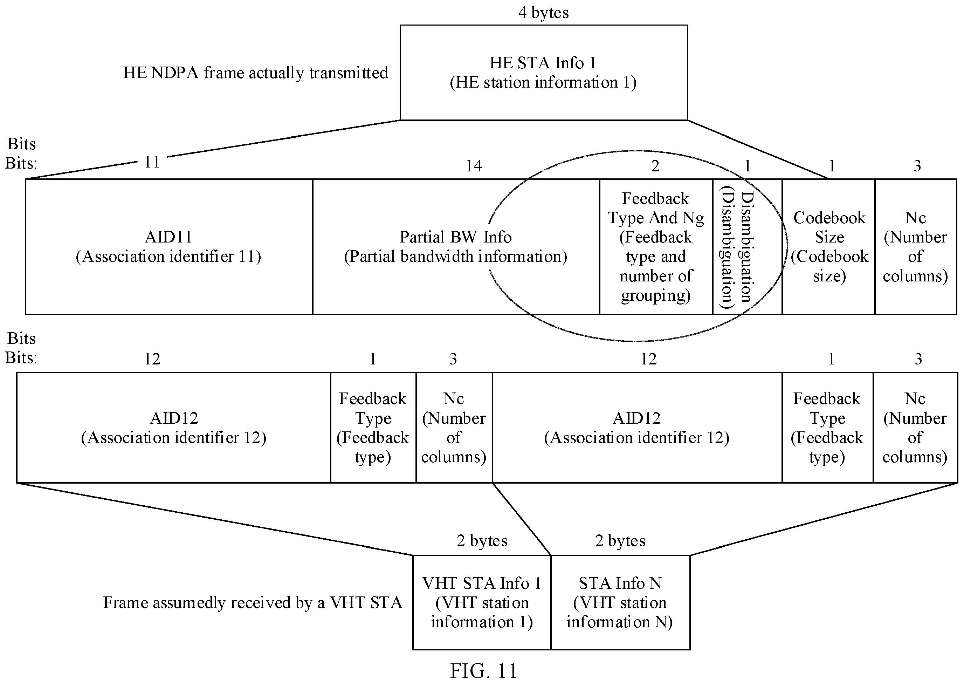

It should be understood that a STA may identify, based on an association identifier in a station information field of a received NDPA frame, whether the NDPA frame is sent to the STA. Because a STA of an earlier version does not identify a new NDPA frame variant (for example, a VHT station may consider an HE NDPA frame or a ranging NDPA frame as a VHT NDPA frame), the STA of the earlier version needs to be prevented from mistakenly considering that a portion of the new NDPA frame variant is sent to the STA. If misreading occurs, the STA of the earlier version performs unnecessary channel information computation, resulting in buffer resource waste and power consumption. For example, a VHT station reads an HE NDPA frame. FIG. 11 is a schematic diagram in which a VHT station reads an HE NDPA frame. As shown in FIG. 11, the VHT station considers a third byte and a fourth byte of a 4-byte station information field of the HE NDPA frame as a second station information field of a VHT NDPA frame, and considers first 12 bits as a 12-bit association identifier subfield. If last 9 bits of a partial bandwidth information subfield, a feedback type and number of grouping subfield in 2 bits, and a disambiguation bit in 1 bit exactly correspond to an AID of a VHT station, misreading occurs in the VHT station. Therefore, a disambiguation bit is introduced into the HE NDPA frame, and a value of the disambiguation bit is forcibly set to 1. This bit corresponds to a most significant bit (most significant bit) of a 12-bit AID. When the most significant bit of the AID is 1, AID = 2048. In this case, the VHT STA reads the 12 bits as an AID greater than 2047. However, the 802.11 standard has not defined an AID greater than 2047. Therefore, the VHT STA considers the AID greater than 2047 as an AID of another STA, and therefore no misreading occurs. Because the 802.11 standard has not defined the AID greater than 2047, the HE NDPA frame reduces a quantity of bits of the association identifier to 11 bits, and saves 1 bit for a disambiguation subfield for transmitting information.

For a ranging NDPA frame, a station information field of the ranging NDPA frame is the same as a station information field of the HE NDPA frame, and lengths of the fields are both 4 bytes. In addition, a disambiguation bit is introduced to prevent the VHT STA from misreading. For an HE STA, because the HE NDPA frame and the ranging NDPA frame have same association identifier information, a transmit end of channel sounding does not send the ranging NDPA frame to the HE STA that does not support the ranging standard. Therefore, no misreading occurs.

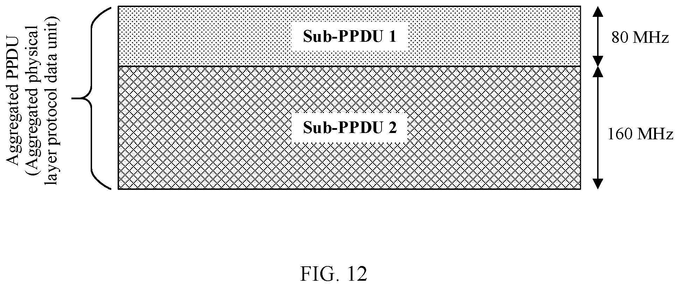

Although the 802.11ac, 802.11ax, and 802.11az standards all distinguish NDPA frame variants, a design of an EHT NDPA frame and how to support channel sounding of a larger bandwidth and a larger number of streams and deceive the previous three earlier users (namely, a VHT station, an HE station, and a station that supports the 802.11az standard) are not considered. In addition, the EHT standard allows simultaneous/concurrent transmission of physical layer protocol data units (physical layer protocol data unit, PPDU) of different generations of standards on different frequency segments, namely, transmission of an aggregated PPDU (aggregate physical layer protocol data unit, A-PPDU) on a plurality of frequency segments. FIG. 12 is a schematic diagram of an aggregated PPDU. As shown in FIG. 12, a sub-PPDU (a sub-PPDU 1) in an EHT format is transmitted on an 80 MHz frequency segment, and a sub-PPDU (a sub-PPDU 2) in an HE format is transmitted on a 160 MHz frequency segment. The 80 MHz frequency segment and the 160 MHz frequency segment do not overlap in frequency. Therefore, in an A-PPDU mechanism, an HE station, an EHT station, and a station that supports a next-generation standard of the EHT standard (the next-generation standard of the EHT standard in this specification is referred to as EHT plus (EHT plus), EHT+ for short) may simultaneously transmit data on orthogonal resource blocks. Therefore, channel sounding of the HE station, the EHT station, and the EHT+ station (the EHT+ station in this specification refers to a station that supports the EHT+ standard and the earlier 802.11 standards) need to be simultaneously completed.

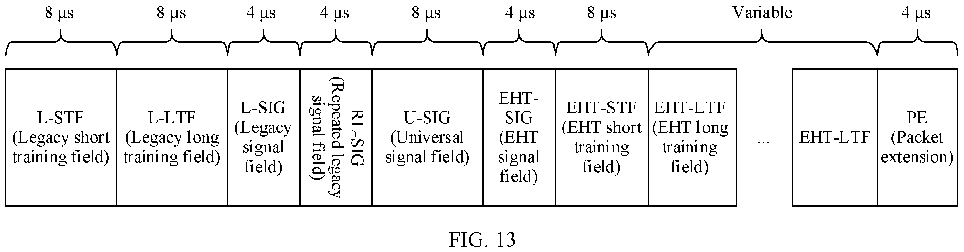

In an implementation, in the EHT standard, to ensure that the EHT station can perform channel sounding, first 2 bits of the sounding dialog token field of the NDPA frame are set to both 1 (in other words, Ranging = 1, and HE = 1 in Table 2), to indicate the EHT NDPA frame. A frame structure of the EHT NDPA frame is defined to perform channel measurement of the EHT station. FIG. 13 is a schematic diagram of a frame structure of an EHT NDP. As shown in FIG. 13, the EHT NDP includes a legacy short training field, a legacy long training field, a legacy signal field, a repeated legacy signal field, a universal signal field, an EHT signal field, an EHT short training field, an EHT long training field, and a data packet extension field. The EHT NDP does not include a data field.

In this implementation, because the first 2 bits of the sounding dialog token field are set to both 1, the HE station determines that this is an undefined state, and stops parsing subsequent content, and therefore cannot participate in subsequent channel sounding. In other words, the NDPA frame can only be used to notify the EHT station to perform channel sounding, and cannot notify the HE station and the EHT station to simultaneously/concurrently perform channel sounding. In addition, even if the HE station can parse a subsequent station information field based on an HE protocol format, the EHT NDP shown in FIG. 13 has one more EHT signal field than the HE NDP shown in FIG. 8. This causes time misalignment of the EHT NDP and the HE NDP. In this case, interference is caused when two types of NDPs (namely, the EHT NDP and the HE NDP) are simultaneously sent to perform channel sounding. Therefore, channel sounding of the HE station and the EHT station cannot be simultaneously performed.

Therefore, an embodiment of this application provides a channel sounding method, to notify an HE station, an EHT station, and an EHT+ station to simultaneously perform channel sounding, to support beamforming during aggregated packet transmission.

According to the technical solutions provided in this embodiment of this application, a sounding dialog token field of an NDPA frame is uniformly indicated in an HE format. In other words, a first bit of the sounding dialog token field is set to 0, and a second bit is set to 1, to indicate that the NDPA frame includes at least two types of station information fields. The HE station parses a station information field based on a conventional HE format. The EHT station/EHT+ station determines, based on 14 bits adjacently after an AID11 subfield in the station information field, whether a format for parsing the aggregated NDPA frame is an EHT format, an EHT+ format, or an HE format, and parses the station information field based on a corresponding format. In this way, one NDPA frame may be used to notify the HE station, the EHT station, and the EHT+ station to simultaneously perform channel sounding. After the NDPA frame, the HE NDP is sent, so that all types of stations perform channel sounding (or channel estimation) based on the HE NDP, and feed back a channel sounding result based on an indication in a station information field of each station. The following describes in detail the technical solutions provided in this application with reference to more accompanying drawings.

The technical solutions provided in this application are described in detail by using two embodiments. In descriptions of Embodiment 1, an NDPA frame includes two types of station information fields, and a ranging bit of a sounding dialog token field of the NDPA frame is set to 0 and an HE bit is set to 1, to notify an HE station and an EHT station to separately perform channel sounding. In descriptions of Embodiment 2, an NDPA frame includes three types of station information fields, and a ranging bit of a sounding dialog token field of the NDPA frame is set to 0 and an HE bit is set to 1, to notify an HE station, an EHT station, and an EHT+ station to separately perform channel sounding. It may be understood that the AP and the STA in this application may be a single-link device, or may be a functional entity or a functional unit in the multi-link device. For example, the AP in this application is an AP in an AP multi-link device, and the STA is a STA in a station multi-link device. This is not limited in this application.

It may be understood that the following describes the method provided in this application by using an example of a communication system including one AP and a plurality of STAs. The AP at least supports the 802.11be protocol (or referred to as the Wi-Fi 7, the EHT protocol), and may further support another WLAN communication protocol, for example, protocols such as the 802.11ax and the 802.11ac. In the plurality of STAs, at least one STA supports the 802.11be protocol (in other words, at least one EHT station exists), and at least one STA supports the 802. 11ax protocol (in other words, at least one HE station exists). It should be understood that the AP and the STA in this application may further support a next-generation protocol of the 802.11be. In other words, the method provided in this application is applicable to the 802.11be protocol and a next-generation protocol of the 802.11be.

It should be understood that an access point in this embodiment of this application is merely an example of a channel sounding initiator (namely, a beamformer). During actual application, the beamformer may be another device. This is not limited in this embodiment of this application. Likewise, a station (for example, the first station and the second station) in this embodiment of this application is merely an example of channel sounding responder (namely, a beamformee). During actual application, the beamformee may be another device. This is not limited in this embodiment of this application.

It should be further understood that, in this application, the first station is an HE station, the second station is an EHT station, and the third station is an EHT+ station. The HE station is a station that supports the 802.11ax standard but does not support the 802.11be standard. The EHT station is a station that supports the 802.11be standard. The EHT+ station is a station that supports the next-generation standard of the 802.11be.

**Embodiment 1**

Embodiment 1 of this application mainly describes how to simultaneously perform channel measurement on an HE station and an EHT station, to support beamforming during aggregated packet transmission.

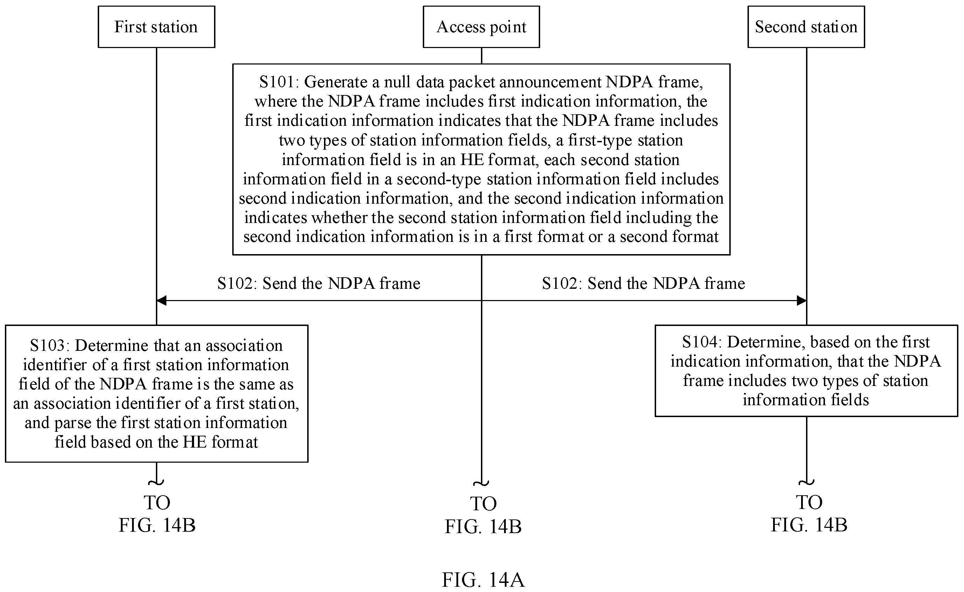

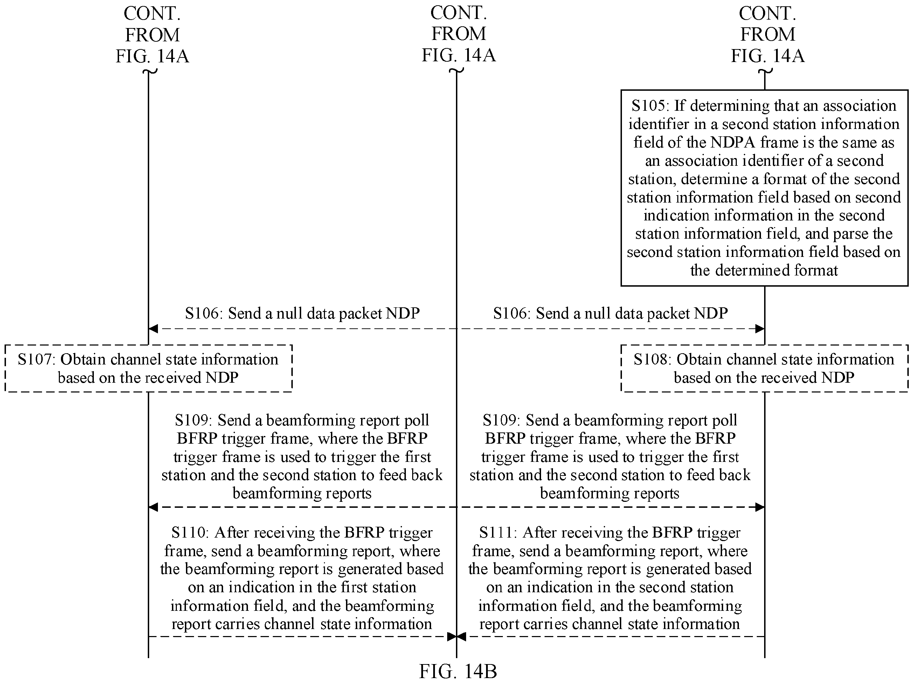

FIG. 14A and FIG. 14B show a schematic flowchart of a channel sounding method according to an embodiment of this application. As shown in FIG. 14A and FIG. 14B, the channel sounding method includes but is not limited to the following steps.

S101: An access point generates a null data packet announcement NDPA frame, where the NDPA frame includes first indication information, the first indication information indicates that the NDPA frame includes two types of station information fields, a first-type station information field is in an HE format, each second station information field in a second-type station information field includes second indication information, and the second indication information indicates whether the second station information field including the second indication information is in a first format or a second format.

S 102: The access point sends the NDPA frame. Correspondingly, a first station and a second station receive the NDPA frame.

Specifically, the access point generates and sends the NDPAframe, where the NDPAframe includes the first indication information for indicating that the NDPA frame includes two types of station information fields. The first-type station information field is in the HE format. Each second station information field in the second-type station information field includes the second indication information for indicating whether the second station information field including the second indication information is in the first format or the second format. Correspondingly, the first station and the second station receive the NDPA frame. The first station is an HE station. The second station is an EHT station. Optionally, in this embodiment of this application, the "NDPA frame" may be in a form of an aggregated PPDU, and therefore may be referred to as an aggregated NDPA frame, and may include both a sub-PPDU in an HE format and a sub-PPDU in an EHT format at a physical layer.

It should be understood that the first-type station information field may be a station information field sent to the HE station (the station information field can only be in an HE format, because the HE station supports only the 802.11ax standard), and the second-type station information field may be a station information field sent to the EHT station (the station information field may be in an EHT format or an HE format, because the EHT station supports both the 802.11ax standard and the 802.11be standard).

For a frame structure of the NDPA frame, refer to FIG. 10. A length of each station information field in the NDPA frame is 4 bytes. The first indication information is B0 whose value is 0 and B 1 whose value is 1 in a sounding dialog token field of the NDPA frame, and indicates that the NDPA frame includes two types of station information fields. In addition, a ranging bit (namely, a first bit of the sounding dialog token field) of the sounding dialog token field of the NDPA frame is set to 0, and an HE bit (namely, a second bit of the sounding dialog token field) is set to 1, so that the HE station considers the NDPA frame as an HE NDPA frame, and the HE station can parse the NDPA frame. Optionally, each first station information field in the first-type station information field still uses a structure in the 802.11ax standard. For details, refer to the frame structure of the station information field in FIG. 7. Details are not described herein again. In the first station information field, an 11-bit AID 11 subfield identifies an associated station. An RU start index subfield and an RU end index subfield in a partial bandwidth information subfield respectively indicate a start position and an end position of 26-tone RUs that need to feed back a sounding result. The 802.11ax standard supports a maximum bandwidth of 160 MHz, and the 160 MHz bandwidth includes 74 26-tone RUs. Therefore, values of both the RU start index and the RU end index range from 0 to 73, and values between 74 and 127 are in a reserved state. It should be understood that the first-type station information field includes one or more first station information fields (or referred to as HE station information fields in an HE format). These first station information fields are all in the HE format, and still use a structure in the 802.11ax standard.

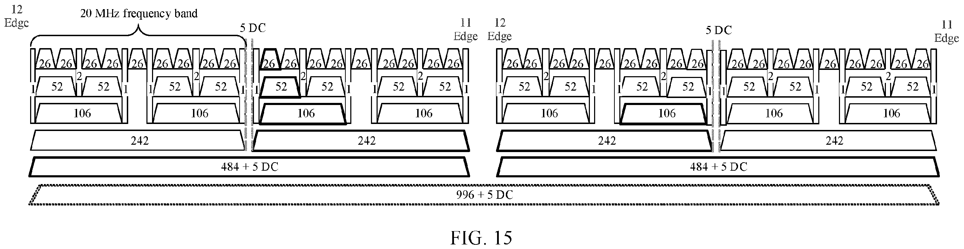

It should be understood that, in the EHT standard, different quantities of subcarriers are combined to form one resource block. FIG. 15 is a schematic diagram of an 80 MHz tone plan (tone plan) in the 802.11be standard. As shown in FIG. 15, if all subcarriers in an 80 MHz bandwidth are grouped into one RU, a 996-tone RU is formed, including 996 subcarriers. The 80 MHz bandwidth may alternatively be divided into more RUs. For example, the 80 MHz bandwidth is divided into 2 484-tone RUs, and each RU includes 484 subcarriers; or the 80 MHz bandwidth may be divided into 4 242-tone RUs, 8 106-tone RUs, 16 52-tone RUs, or 36 26-tone RUs. It should be further understood that subcarriers in each 80 MHz bandwidth in the 160 MHz bandwidth and the 320 MHz bandwidth are divided in a same manner. Optionally, each second station information field in the second-type station information field includes the second indication information for indicating whether the second station information field including the second indication information is in the first format or the second format. The first format is an HE format, and the second format is an EHT format; or the first format is an HE format, and the second format is an EHT next-generation protocol format; or the first format is an EHT format, and the second format is an EHT next-generation protocol format. In this embodiment of this application, for example, the first format is an HE format, and the second format is an EHT format. It should be understood that the second-type station information field includes one or more second station information fields, one second station information field includes one piece of second indication information, and the second indication information indicates only a format of the second station information field.

Because values of both the RU start index and the RU end index in the first-type station information field range from 0 to 73, and the RU start index is less than the RU end index, the second-type station information field may be designed based on values and sizes of the RU start index and the RU end index. The following uses any second station information field in the second-type station information field as an example to describe an implementation of the second-type station information field in detail. It should be understood that the following implementations may be applied to each second station information field in the second-type station information field.

In an implementation, two most significant bits (namely, B23 and B24 that are of the second station information field and that should be understood as the second indication information) of the RU end index of the second station information field are set to both 1 (in this case, if the second station information field is parsed based on the HE format, the RU end index is greater than or equal to 96, and an HE station indication rule is no longer complied with), to indicate that the second station information field is in the EHT format. In other words, the EHT station should parse the second station information field based on the EHT format. Optionally, when B23 and B24 of the second station information field are not both 1 (in other words, values of B23 and B24 are "01", "10", or "00"), it indicates that the second station information field is in the HE format. In other words, the EHT station should parse the second station information field based on the HE format.

If B23 and B24 of the second station information field indicate that the second station information field is in the EHT format, the second station information field may be referred to as an EHT station information field in the EHT format. If B23 and B24 of the second station information field indicate that the second station information field is in the HE format, the second station information field may be referred to as the HE station information field that is in the HE format and that still uses a station information field structure in the 802.11ax standard. For details, refer to the frame structure of the station information field in FIG. 7. Details are not described herein again. It should be understood that, the second-type station information field may include both an EHT station information field and an HE station information field; or the second-type station information field includes only an EHT station information field; or the second-type station information field includes only an HE station information field.

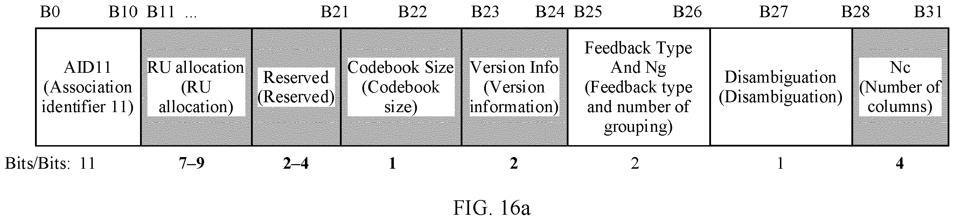

FIG. 16a is a schematic diagram of an EHT station information field according to an embodiment of this application. As shown in FIG. 16a, the EHT station information field includes one or more of an AID 11 subfield, an RU allocation subfield, a reserved field, a codebook size subfield, a version information subfield, a feedback type and number of grouping subfield, a disambiguation subfield, and a number of columns subfield.

A length of the AID11 subfield is 11 bits that are specifically B0 to B10 of the EHT station information field. The AID 11 subfield identifies an associated station, or identifies a station that needs to perform channel sounding.

A length of the RU allocation subfield is 7 to 9 bits. A start bit of the RU allocation subfield is B 11 of the EHT station information field. A largest end bit of the RU allocation subfield is B19 of the EHT station information field. The RU allocation subfield indicates an RU of a channel sounding result that needs to be fed back. It should be understood that because the length of the RU allocation subfield in FIG. 16a is only 7 to 9 bits, a resource block cannot be indicated at a granularity of a 26-tone RU, but may be indicated at a larger granularity, for example, a granularity of a 242-tone RU.

A length of the reserved field is 2 to 4 bits. An end bit of the reserved field is B21 of the EHT station information field, indicating reservation. A sum of the length of the reserved field and the length of the RU allocation subfield is equal to 11. In other words, if the length of the RU allocation subfield is 7 bits, the length of the reserved field is 4 bits; if the length of the RU allocation subfield is 9 bits, the length of the reserved field is 2 bits; or if the length of the RU allocation subfield is 8 bits, the length of the reserved field is 3 bits.

A length of the codebook size subfield is 1 bit that is specifically B22 of the EHT station information field. A length of the feedback type and number of grouping subfield is 2 bits that are specifically B25 and B26 of the EHT station information field. The 1-bit codebook size subfield and the 2-bit feedback type and number of grouping subfield jointly indicate joint information such as quantization bits, the number of combined subcarriers, and feedback content of a beamforming feedback matrix.

A length of the version information subfield (the second indication information is carried in the subfield) is 2 bits that are specifically B23 and B24 of the EHT station information field. The 2-bit version information subfield indicates whether the station information field is in an HE format or an EHT format. In this embodiment of this application, a value of the 2-bit version information subfield is 11.

A length of the disambiguation subfield is 1 bit that is specifically B27 of the EHT station information field. A value of the 1-bit disambiguation subfield is 1, to avoid that a VHT station misreads content of the station information field. A length of the number of columns subfield is 4 bits that are specifically B28 to B31 of the EHT station information field. The number of columns subfield indicates a number of columns of a beamforming feedback matrix. Because the EHT standard supports a maximum of 16 spatial streams, the number of columns subfield needs to use 4 bits to indicate that a number of columns to be fed back is a value from 1 to 16.

It should be understood that names of fields in FIG. 16a are merely examples. In practice, the names may be replaced with other names. This is not limited in this embodiment of this application.

In another implementation, a most significant bit (namely, B17 of the second station information field) of the RU start index of the second station information field is set to 1, and a most significant bit (namely, B24 of the second station information field) of the RU end index is set to 0 (in this case, if the second station information field is parsed based on the HE format, the RU start index is greater than or equal to the RU end index, and an HE station indication rule is no longer complied with), to indicate that the second station information field is in the EHT format. In other words, the EHT station should parse the second station information field based on the EHT format. Optionally, when a value of B17 of the second station information field is not 1 or a value of B24 is not 0 (in other words, values of B17 and B24 are "01", "11", or "00"), it indicates that the second station information field is in the HE format. In other words, the EHT station should parse the second station information field based on the HE format.

It may be learned that, in this embodiment of this application, station information fields in different formats (the HE format and the EHT format) are distinguished based on the RU start index and the RU end index, so that various different types of stations can correctly interpret respective station information fields, to obtain respective channel sounding parameters.

If B 17 and B24 of the second station information field indicate that the second station information field is in the EHT format, the second station information field may be referred to as an EHT station information field in the EHT format. If B 17 and B24 of the second station information field indicate that the second station information field is in the HE format, the second station information field may be referred to as the HE station information field that is in the HE format and that still uses a station information field structure in the 802. 11ax standard. For details, refer to the frame structure of the station information field in FIG. 7. Details are not described herein again. It should be understood that, the second-type station information field may include both an EHT station information field and an HE station information field; or the second-type station information field includes only an EHT station information field; or the second-type station information field includes only an HE station information field.

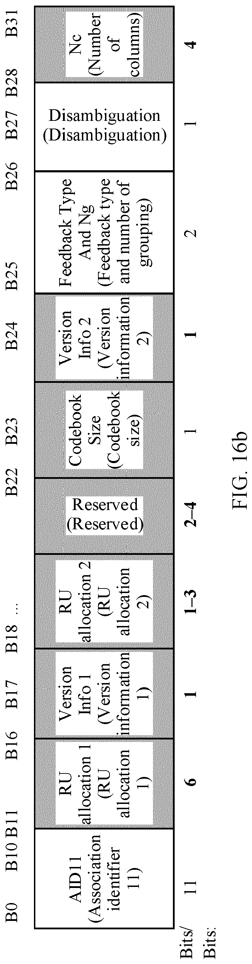

FIG. 16b is another schematic diagram of an EHT station information field according to an embodiment of this application. As shown in FIG. 16b, the station information field of the EHT station includes one or more of an AID 11 subfield, an RU allocation 1 subfield (or a first RU allocation subfield), a version information 1 subfield (or a first version information subfield), an RU allocation 2 subfield (or a second RU allocation subfield), a reserved field, a codebook size subfield, a version information 2 subfield (or a second version information subfield), a feedback type and number of grouping subfield, a disambiguation subfield, and a number of columns subfield.

A length of the AID 11 subfield is 11 bits that are specifically B0 to B 10 of the EHT station information field. The AID 11 subfield identifies an associated station, or identifies a station that needs to perform channel sounding.

A length of the RU allocation 1 subfield (or the first RU allocation subfield) is 6 bits that are specifically B 11 to B 16 of the EHT station information field. A length of the RU allocation 2 subfield (or the second RU allocation subfield) is 1 to 3 bits. A start bit of the RU allocation 2 subfield is B 18 of the EHT station information field. A largest end bit of the RU allocation 2 subfield is B20 of the EHT station information field. The RU allocation 1 subfield (or the first RU allocation subfield) and the RU allocation 2 subfield (or the second RU allocation subfield) jointly indicate an RU that feeds back a channel sounding result. It should be understood that because a sum of the length of the RU allocation 1 subfield and the length of the RU allocation 2 subfield in FIG. 16b is only 7 to 9 bits, a resource block cannot be indicated at a granularity of a 26-tone RU, but may be indicated at a larger granularity, for example, a granularity of a 242-tone RU.

A length of the version information 1 subfield (or the first version information subfield) is 1 bit that is specifically B 17 of the EHT station information field. A length of the version information 2 subfield (or the second version information subfield) is 1 bit that is specifically B24 of the EHT station information field. The 1-bit version information 1 subfield (or the first version information subfield) and the 1-bit version information 2 subfield (or the second version information subfield) jointly indicate whether the station information subfield is in an HE format or an EHT format. In this embodiment of this application, a value of the version information 1 subfield (or the first version information subfield, namely, B 17) is 1, and a value of the version information 2 subfield (or the second version information subfield, namely, B24) is 0. It may be understood that the second indication information is carried in two subfields: the version information 1 subfield (or the first version information subfield) and the version information 2 subfield (or the second version information subfield).

A length of the reserved field is 2 to 4 bits. An end bit of the reserved field is B22 of the EHT station information field, indicating reservation. A sum of the length of the reserved field and the length of the RU allocation 2 subfield (or the second RU allocation subfield) is equal to 5. In other words, if the length of the RU allocation 2 subfield is 1 bit, the length of the reserved field is 4 bits; if the length of the RU allocation subfield is 3 bits, the length of the reserved field is 2 bits; or if the length of the RU allocation subfield is 2 bits, the length of the reserved field is 3 bits.

A length of the codebook size subfield is 1 bit that is specifically B23 of the EHT station information field. A length of the feedback type and number of grouping subfield is 2 bits that are specifically B25 and B26 of the EHT station information field. The 1-bit codebook size subfield and the 2-bit feedback type and number of grouping subfield jointly indicate joint information such as quantization bits, the number of combined subcarriers, and feedback content of a beamforming feedback matrix.

A length of the disambiguation subfield is 1 bit that is specifically B27 of the EHT station information field. A value of the 1-bit disambiguation subfield is 1, to avoid that a VHT station misreads content of the station information field. A length of the number of columns subfield is 4 bits that are specifically B28 to B31 of the station information field. The number of columns subfield indicates a number of columns of a beamforming feedback matrix. Because the EHT standard supports a maximum of 16 spatial streams, the number of columns subfield needs to use 4 bits to indicate that a number of columns to be fed back is a value from 1 to 16.

It should be understood that names of fields in FIG. 16b are merely examples. In practice, the names may be replaced with other names. This is not limited in this embodiment of this application.

It may be learned that in this embodiment of this application, B17 of the station information field is set to 1 and B24 is set to 0, or B23 and B24 of the station information field are set to both 1, to indicate that the station information field is in the EHT format. In addition, the ranging bit of the sounding dialog token field of the NDPA frame is set to 0 and the HE bit is set to 1, to indicate that the NDPA frame includes two types of station information fields, so that the NDPA frame may be used to notify the HE station to perform channel measurement, and the HE station and the EHT station can simultaneously perform channel sounding, to support beamforming during aggregated packet transmission.

S103: The first station determines that an association identifier of a first station information field of the NDPA frame is the same as an association identifier of the first station, and parses the first station information field based on the HE format.

Specifically, the ranging bit (namely, the first bit of the sounding dialog token field) of the sounding dialog token field of the NDPA frame is set to 0, and the HE bit (namely, the second bit of the sounding dialog token field) is set to 1, so that the first station (namely, the HE station) considers the NDPA frame as an HE NDPA frame. Therefore, the first station searches the NDPA frame for a station information field that matches the association identifier of the first station, and parses the station information field of the first station based on the HE format.

It should be understood that, although the first indication information (namely, B0 whose value is 0 and B1 whose value is 1 in the sounding dialog token field) indicates that the NDPA frame includes two types of station information fields, the HE station still considers the NDPA frame as an HE NDPA frame. In other words, for the HE station, meanings of the first indication information (namely, B0 whose value is 0 and B1 whose value is 1 in the sounding dialog token field) in this embodiment of this application are still interpreted according to the 802.11ax standard. To be specific, the HE station considers that the first indication information indicates that the NDPA frame is an HE NDPA frame.

S104: The second station determines, based on the first indication information, that the NDPA frame includes two types of station information fields.

S105: If the second station determines that an association identifier in a second station information field of the NDPA frame is the same as an association identifier of the second station, the second station determines a format of the second station information field based on second indication information in the second station information field, and parses the second station information field based on the determined format.

Specifically, after receiving the NDPA frame, the second station (the EHT station) parses the first indication information in the NDPA frame, and determines that the NDPA includes two types of station information fields. Then, the second station searches the station information field of the NDPA frame for a station information field whose association identifier is the same as the association identifier of the second station. Assuming that the second station obtains the second station information field whose association identifier is the same as the association identifier of the second station, the second station determines the format of the second station information field based on the second indication information in the second station information field, and parses the station information field (namely, the second station information field) of the second station based on the determined format.

There are two implementations in which the second station determines the format of the second station information field.

In a first implementation, the second station directly reads the second indication information (namely, B23 and B24, or B 17 and B24) of the second station information field, and determines a value of the second indication information (namely, B23 and B24, or B17 and B24). When the values of B23 and B24 are 11, or the value of B17 is 1 and the value of B24 is 0, it is determined that the second station information field is in the EHT format (namely, the second format).

Optionally, when the values of B23 and B24 are "10", "01", or "00", it is determined that the second station information field is in the HE format (namely, the first format). Alternatively, when the values of B17 and B24 are "00", "01", or "11", it is determined that the second station information field is in the HE format (namely, the first format).

In a second implementation, the second station considers B 11 to B24 (14 bits in total) of the second station information field as a 7-bit RU start index (RU start index) and a 7-bit RU end index (RU end index), to obtain an RU start index value and an RU end index value. If the obtained RU start index value is greater than or equal to the RU end index value (for example, when the value of B17 is 1 and the value of B24 is 0, the RU start index is definitely greater than or equal to the RU end index), or the RU start index value is greater than 73 (for example, when the values of B 16 and B17 are 11, the RU start index is definitely greater than 73), or the RU end index value is greater than 73 (for example, when values of B23 and B24 are 11, the RU end index is definitely greater than 73), the second station determines that the second station information field is in the EHT format (namely, the second format). Because the RU start index value and the RU end index value that are obtained through parsing based on the HE format do not meet the specifications of the 802.11ax, it is incorrect to parse the second station information field based on the HE format.

It should be understood that, it may be learned from the EHT station information field shown in FIG. 16a and FIG. 16b that, when the values of B23 and B24 of the EHT station information field are both 1, the RU end index value is definitely greater than 73; and when the value of B 17 of the EHT station information field is 1 and the value of B24 is 0, the RU start index value is definitely greater than or equal to the RU end index value. In other words, when the value of the version information subfield (the second indication information is carried in the subfield) in the EHT station information field is 11, the RU end index obtained through parsing based on the HE format is definitely greater than 73; or when the value of the version information 1 subfield in the EHT station information field is 1 and the value of the version information 2 subfield is 0 (the second indication information is carried in the two version information subfields), the RU start index obtained through parsing based on the HE format is definitely greater than or equal to the RU end index.

Optionally, if the obtained RU start index value is less than the RU end index value, and both the RU start index value and the RU end index value are less than or equal to 73, it is correct to parse the second station information field based on the HE format. In this case, the second station determines that the second station information field is in the first format (namely, the HE format), and continues to parse a subsequent subfield in the second station information field based on the HE format.

It should be understood that, for the AP, when generating the NDPA frame, the AP may determine to notify which type of station, and set a corresponding station information field to a corresponding format. For example, when the AP wants to notify an EHT station whose AID is 10, the AP sets AID11 in a station information field to 10, and other subfields in the station information field are set based on the format in FIG. 16a or FIG. 16b. In other words, from the perspective of an AP side, the station information field (namely, the second-type station information field) of the EHT station is in the form of FIG. 16a or FIG. 16b. However, the EHT station supports both the 802.11ax standard and the 802.11be standard. In other words, the EHT station may parse the NDPA frame based on HE, or may parse the NDPA frame based on EHT. Therefore, before parsing the NDPA frame, the EHT station does not know a format in which a station information field that is in the NDPA frame and that matches the association identifier of the EHT station is set. Therefore, after receiving the NDPA frame, the EHT station first needs to determine a format for parsing the station information field matching the association identifier of the EHT station, and then parse the station information field of the EHT station based on the determined format, so that the EHT station can correctly parse the station information field, to obtain a channel sounding parameter of the EHT station.

It should be understood that an execution sequence of step S 103 and step S 104 to step S 105 is not limited in this embodiment of this application. For example, step S103 may be performed before step S104 to step S105, or step S103 may be performed after step S104 to step S105, or step S103 and step S 104 to step S 105 may be simultaneously/concurrently performed.

Optionally, the channel sounding method in FIG. 14A and FIG. 14B further includes one or more of the following steps.

S106: The access point sends a null data packet NDP. Correspondingly, the first station and the second station receive the NDP.

Specifically, if a bandwidth of the NDP is less than or equal to 160 MHz, the access point sends an HE NDP on a corresponding bandwidth. For example, assuming that the access point wants to send a 160 MHz NDP, the access point sends a 160 MHz HE NDP on a primary 160 MHz channel. Assuming that the access point wants to send an 80 MHz NDP, the access point sends an 80 MHz HE NDP on a primary 80 MHz channel. If the bandwidth of the NDP is 320 MHz, the access point sends a 160 MHz HE NDP on the primary 160 MHz channel, and simultaneously/concurrently sends, on a secondary 160 MHz channel, an NDP that is in the HE format and that is obtained by performing phase rotation on the HE NDP. In other words, when the bandwidth is 320 MHz, the NDP sent by the access point includes two portions, where one portion is a 160 MHz HE NDP, and the other portion is an NDP that is in the HE format and that is obtained by rotating the 160 MHz HE NDP by a specific coefficient on a frequency segment.

It may be learned that when the bandwidth is less than or equal to 160 MHz, the access point sends only one NDP in the HE format, so that both the HE station and the EHT station can perform channel sounding based on the HE NDP. In the 320 MHz bandwidth, the HE NDP is sent on a first 160 MHz frequency segment (namely, the primary 160 MHz channel), and the phase-rotated NDP in the HE format is sent on a second 160 MHz frequency segment (namely, the secondary 160 MHz channel), to implement time alignment of the two NDPs in the HE format. This avoids interference.

Optionally, when the NDP in a 2x mode is used, for the 320 MHz bandwidth, a frequency domain sequence in a long training field (Long training field, LTF) of a 160 MHz HE NDP on a primary 160 MHz channel uses a sequence defined in the 802.11ax, that is, LTF2x_160 = [LTF80MHz_primary, zeros (1, 23), LTF80MHz_secondary]. LTF2x_160 indicates an LTF sequence in the 2x mode in the 160 MHz bandwidth, zeros (1, 23) indicates 23 zeros. The "LTF sequence" mentioned in this embodiment of this application may be the frequency domain sequence of the LTF, and the two may be used interchangeably in this embodiment of this application.

Herein, LTF80MHz_primary = [LTF80MHz_2x_part1, LTF80MHz_2x_part2, LTF80MHz_2x_part3, LTF80MHz_2x_part4, LTF80MHz_2x_part5].

LTF80MHz_secondary = [LTF80MHz_2x_part1, -LTF80MHz_2x_part2, LTF80MHz_2x_part3, LTF80MHz_2x_part4, -LTF80MHz_2x_part5].

LTF80MHz_2x_part1 = [+1, 0, +1, 0, -1, 0, +1, 0, +1, 0, +1, 0, -1, 0, +1, 0, +1, 0, +1, 0, +1, 0, -1, 0, -1, 0, -1, 0, +1, 0, -1, 0, -1, 0, +1, 0, +1, 0, -1, 0, +1, 0, +1, 0, +1, 0, -1, 0, -1, 0, -1, 0, +1, 0, +1, 0, +1, 0, +1, 0, -1, 0, +1, 0, +1, 0, +1, 0, -1, 0, +1, 0, -1, 0, -1, 0, +1, 0, -1, 0, -1, 0, +1, 0, +1, 0, -1, 0, -1, 0, -1, 0, +1, 0, -1, 0, -1, 0, +1, 0, -1, 0, +1, 0, +1, 0, -1, 0, +1, 0, +1, 0, -1, 0, +1, 0, -1, 0, -1, 0, +1, 0, -1, 0, -1, 0, -1, 0, +1, 0, -1, 0, - 1, 0, +1, 0, +1, 0,

-1, 0, +1, 0, +1, 0, +1, 0, -1, 0, -1, 0, -1, 0, -1, 0, +1, 0, -1, 0, +1, 0, +1, 0, +1, 0, -1, 0, +1, 0, +1, 0, +1, 0, +1, 0, -1, 0, -1, 0, -1, 0, +1, 0, +1, 0, +1, 0, -1, 0, -1, 0, +1, 0, +1, 0, +1, 0, -1, 0, +1, 0, +1, 0, -1, 0, +1, 0, -1, 0, -1, 0, -1, 0, +1, 0, -1, 0, -1, 0, -1, 0, +1, 0, -1, 0, +1, 0, +1, 0, -1, 0, +1, 0].

LTF80MHz_2x_part2 = [+1, 0, -1, 0, -1, 0, -1, 0, +1, 0, -1, 0, -1, 0, -1, 0, +1, 0, -1, 0, +1, 0, +1, 0, -1, 0, +1, 0, +1, 0, +1, 0, -1, 0, -1, 0, +1, 0, +1, 0, +1, 0, -1, 0, +1, 0, +1, 0, -1, 0, +1, 0, -1, 0, -1, 0, +1, 0, -1, 0, +1, 0, +1, 0, +1, 0, -1, 0, +1, 0, +1, 0, +1, 0, +1, 0, -1, 0, -1, 0, -1, 0, +1, 0, -1, 0, -1, 0, +1, 0, +1, 0, -1, 0, +1, 0, +1, 0, +1, 0, -1, 0, -1, 0, -1, 0, -1, 0, +1, 0, +1, 0, +1, 0, -1, 0, -1, 0, -1, 0, -1, 0, +1, 0, -1, 0, -1, 0, -1, 0, +1, 0, -1, 0, +1, 0, +1, 0, +1, 0, - 1, 0, -1, 0, +1, 0, +1, 0, +1, 0, -1, 0, +1, 0, +1, 0, -1, 0, +1, 0, -1, 0, -1, 0, -1, 0, -1, 0, +1, 0, -1, 0, -1, 0, -1, 0, +1, 0, -1, 0, +1, 0, +1, 0, -1, 0, +1, 0, +1, 0, -1, 0, +1, 0, +1, 0, -1, 0, -1, 0, +1, 0, -1, 0, -1, 0, -1, 0, +1, 0, +1, 0, +1, 0, +1, 0, -1, 0, +1, 0, -1, 0, -1, 0, -1, 0, +1, 0, -1, 0, -1, 0, -1, 0, -1, 0, +1, 0, +1, 0, +1, 0].

LTF80MHz_2x_part3 = [+1, 0, -1, 0, -1, 0, -1, 0, +1, 0, +1, 0, +1, 0, 0, 0, 0, 0, 0, +1, 0, -1, 0, -1, 0, +1, 0, +1, 0, -1, 0, +1].

LTF80MHz_2x_part4 = [0, -1, 0, -1, 0, -1, 0, +1, 0, +1, 0, +1, 0, +1, 0, -1, 0, +1, 0, +1, 0, +1, 0, -1, 0, +1, 0, -1, 0, -1, 0, -1, 0, +1, 0, +1, 0, +1, 0, -1, 0, +1, 0, +1, 0, -1, 0, -1, 0, +1, 0, -1, 0, -1, 0, +1, 0, -1, 0, -1, 0, +1, 0, -1, 0, +1, 0, +1, 0, +1, 0, -1, 0, +1, 0, +1, 0, +1, 0, +1, 0, -1, 0, +1, 0, -1, 0, -1, 0, +1, 0, -1, 0, -1, 0, -1, 0, +1, 0, +1, 0, -1, 0, -1, 0, +1, 0, -1, 0, +1, 0, +1, 0, +1, 0, -1, 0, +1, 0, +1, 0, +1, 0, +1, 0, -1, 0, -1, 0, -1, 0, +1, 0, +1, 0, +1, 0, +1, 0, -1, 0, -1, 0, +1, 0, -1, 0, -1, 0, +1, 0, +1, 0, -1, 0, +1, 0, +1, 0, +1, 0, -1, 0, -1, 0, -1, 0, -1, 0, +1, 0, - 1, 0, -1, 0, -1, 0, +1, 0, -1, 0, +1, 0, +1, 0, -1, 0, +1, 0, -1, 0, -1, 0, +1, 0, -1, 0, -1, 0, -1, 0, +1, 0, +1, 0, -1, 0, -1, 0, -1, 0, +1, 0, -1, 0, -1, 0, +1, 0, -1, 0, +1, 0, +1, 0, +1, 0, -1, 0, +1, 0, +1, 0, +1, 0, -1].

LTF80MHz_2x_part5 = [0, +1, 0, -1, 0, +1, 0, +1, 0, -1, 0, +1, 0, -1, 0, -1, 0, -1, 0, +1, 0, -1, 0, -1, 0, -1, 0, -1, 0, +1, 0, -1, 0, +1, 0, +1, 0, -1, 0, +1, 0, +1, 0, +1, 0, -1, 0, -1, 0, +1, 0, +1, 0, +1, 0, -1, 0, -1, 0, -1, 0, +1, 0, +1, 0, +1, 0, +1, 0, -1, 0, +1, 0, +1, 0, +1, 0, -1, 0, +1, 0, -1, 0, -1, 0, -1, 0, -1, 0, +1, 0, +1, 0, +1, 0, -1, 0, +1, 0, +1, 0, -1, 0, -1, 0, +1, 0, -1, 0, -1, 0, -1, 0, +1, 0, -1, 0, -1, 0, -1, 0, +1, 0, -1, 0, +1, 0, +1, 0, -1, 0, +1, 0, +1, 0, -1, 0, +1, 0, -1, 0, -1, 0, -1, 0, +1, 0, +1, 0, -1, 0, -1, 0, -1, 0, +1, 0, +1, 0, -1, 0, -1, 0, +1, 0, -1, 0, -1, 0, +1, 0, -1, 0, +1, 0, +1, 0, +1, 0, -1, 0, +1, 0, +1, 0, +1, 0, +1, 0, -1, 0, -1, 0, -1, 0, -1, 0, +1, 0, +1, 0, +1, 0, -1, 0, +1, 0, +1, 0, -1, 0, -1, 0, +1, 0, -1, 0, -1, 0, -1, 0, +1, 0, +1, 0, -1, 0, +1, 0, +1, 0, +1, 0, -1, 0, +1, 0, +1].

The 160 MHz NDP that is in the HE format and that is sent on the secondary 160 MHz channel uses an LTF sequence in the following form: LTF2x_160_second = [-LTF80MHz_primary, zeros (1, 23), LTF80MHz_secondary]. LTF2x_160_second indicates an LTF sequence in the 2x mode in the second 160 MHz bandwidth, zeros (1, 23) indicates 23 consecutive zeros. It may be understood that the 2xLTF sequence sent on the secondary 160 MHz channel is obtained by rotating the 2xLTF sequence sent on the primary 160 MHz channel by a specific coefficient. In this manner, a peak average of the entire 320 MHz bandwidth may be low.

Optionally, the 320 MHz bandwidth may be changed to an actual 240 MHz bandwidth through preamble puncturing. When the NDP is sent through preamble puncturing, the sent NDP in the HE format may use the following LTF sequence: LTF2x_240 = [LTF80MHz_primary, zeros (1, 23), LTF80MHz_secondary, zeros (1, 23), -LTF80MHz_primary].

It should be understood that the 2x mode means that a physical layer subcarrier spacing in the NDP is

$$\Delta_F^{2\times} = 20MHz / 128 = 156.25kHz$$

, and a 4x mode means that a physical layer subcarrier spacing in the NDP is

$$\Delta_F^{4\times} = 20MHz / 256 = 78.125kHz$$

.

Optionally, when the NDP in the 4x mode is used, for the 320 MHz bandwidth, an LTF sequence in a 160 MHz HE NDP on a primary 160 MHz channel uses the following sequence: LTF4x_160 = [LTF_80MHz_lower_4x, zeros (1, 23), LTF_80MHz_upper_4x].

Herein, LTF_80MHz_lower_4x = [LTF_80MHz_left_4x, 0, LTF_80MHz_right_4x]. LTF_80MHz_upper_4x = [LTF_80MHz_left_4x, 0, -LTF_80MHz_right_4x].

LTF_80MHz_left_4x = [+1, +1, -1, +1, -1, +1, -1, -1, -1, +1, -1, -1, -1, +1, +1, -1, +1, +1, +1, +1, -1, -1, +1, +1, +1, +1, -1, +1, -1, +1, -1, -1, +1, +1, -1, +1, +1, +1, -1, -1, +1, -1, -1, -1, -1, +1, +1, +1, -1, -1, -1, -1, -1, - 1, +1, +1, +1, +1, +1, +1, -1, +1, +1, +1, -1, +1, +1, -1, -1, -1, +1, -1, +1, -1, -1, +1, +1, -1, +1, -1, +1, +1, +1, +1, +1, -1, -1, +1, +1, +1, -1, +1, +1, +1, -1, -1, -1, +1, -1, +1, +1, -1, +1, +1, -1, +1, -1, -1, +1, +1, +1, +1, -1, -1, +1, +1, +1, +1, -1, +1, +1, -1, -1, -1, +1, -1, +1, -1, +1, +1, -1, +1, -1, +1, -1, +1, +1, -1, +1, -1, +1, -1, -1, +1, +1, -1, +1, -1, -1, -1, -1, -1, +1, +1, -1, -1, -1, -1, +1, -1, +1, -1, +1, +1, -1, -1, +1, -1, -1, -1, +1, +1, -1, +1, +1, +1, +1, -1, -1, -1, +1, +1, +1, +1, -1, +1, +1, +1, +1, +1, +1, -1, +1, +1, +1, -1, +1, +1, +1, -1, +1, +1, -1, -1, -1, +1, - 1, +1, -1, -1, +1, +1, -1, +1, -1, +1, +1, +1, +1, +1, -1, -1, +1, +1, +1, -1, +1, +1, -1, -1, -1, +1, -1, +1, +1, -1, +1, +1, -1, +1, -1, -1, +1, -1, +1, -1, +1, -1, +1, +1, -1, +1, +1, +1, -1, +1, +1, +1, +1, -1, -1, +1, -1, -1, +1, -1, -1, -1, -1, -1, +1, +1, -1, -1, - 1, -1, +1, -1, +1, -1, +1, -1, +1, -1, -1, +1, -1, -1, +1, +1, +1, -1, +1, -1, +1, +1, -1, -1, +1, -1, +1, -1, -1, -1, -1, -1, +1, -1, -1, -1, +1, -1, -1, +1, +1, +1, -1, +1, -1, +1, +1, -1, -1, +1, -1, +1, -1, -1, -1, -1, -1, +1, +1, -1, -1, -1, +1, -1, -1, +1, +1, +1, -1, +1, -1, -1, +1, -1, -1, +1, -1, -1, +1, -1, +1, +1, +1, +1, +1, +1, -1, -1, +1,

+1, +1, +1, +1, -1, +1, +1, -1, -1, -1, +1, -1, -1, -1, +1, -1, +1, -1, +1, +1, -1, +1, -1, +1, -1, +1, +1, +1, -1, +1, +1, +1, - 1, -1, +1, -1, -1, -1, -1, -1, +1, +1, -1, -1, -1, -1, +1, -1, +1, -1, +1, +1, -1, -1, +1, -1, -1, -1, +1, +1, -1, +1, +1, +1, -1, -1, -1, +1, +1, +1, +1, -1, -1, +1, +1, +1, +1, +1, +1, -1, +1, +1, +1, -1, +1, +1, -1, -1, -1, +1, -1, +1, - 1, -1, +1, +1, -1, +1, -1, +1, +1, +1, +1, +1, -1, -1, +1, +1, +1, -1, +1, +1, -1, -1, -1, +1, -1, +1, +1, -1, +1, +1, -1, +1, -1, -1, -1, +1, -1, +1, -1, -1, -1, +1, +1, +1, +1, +1, -1, -1, +1, +1, +1, -1, -1, +1, 0, 0].

LTF_80MHz_right_4x = [0, 0, +1, -1, -1, -1, -1, -1, -1, +1, -1, +1, +1, -1, -1, +1, +1, -1, +1, -1, +1, +1, -1, -1, +1, -1, +1, -1, -1, -1, +1, +1, -1, +1, +1, +1, -1, +1, +1, +1, +1, +1, +1, +1, -1, +1, -1, -1, +1, -1, -1, +1, -1, +1, +1, +1, -1, -1, +1, -1, -1, -1, +1, +1, -1, -1, -1, -1, -1, +1, -1, -1, -1, -1, -1, +1, +1, -1, -1, -1, -1, -1, +1, -1, -1, +1, +1, +1, -1, +1, +1, +1, -1, +1, -1, +1, -1, -1, -1, -1, -1, +1, +1, +1, -1, -1, -1, -1, +1, -1, -1, +1, +1, +1, -1, +1, +1, -1, -1, +1, -1, +1, -1, -1, -1, -1, -1, -1, +1, +1, -1, -1, -1, +1, -1, -1, +1, +1, +1, -1, +1, +1, +1, -1, -1, +1, +1, -1, +1, +1, -1, +1, -1, +1, -1, +1, -1, +1, +1, +1, -1, +1, +1, +1, -1, +1, +1, +1, +1, +1, -1, +1, -1, -1, -1, +1, +1, -1, +1, +1, +1, +1, -1, +1, -1, -1, -1, -1, -1, -1, - 1, +1, -1, +1, +1, -1, +1, +1, -1, +1, -1, -1, -1, +1, +1, -1, +1, +1, +1, -1, -1, +1, +1, +1, +1, +1, -1, +1, -1, -1, -1, -1, +1, +1, -1, -1, -1, -1, +1, +1, -1, -1, -1, -1, +1, -1, -1, +1, +1, +1, -1, +1, +1, -1, -1, +1, -1, +1, -1, +1, +1, +1, -1, +1, -1, -1, +1, +1, -1, +1, -1, +1, -1, +1, +1, +1, -1, -1, +1, -1, -1, -1, +1, -1, -1, -1, -1, -1, -1, +1, -1, +1, +1, -1, +1, +1, -1, +1, -1, -1, +1, +1, -1, +1, +1, +1, -1, -1, +1, +1, +1, +1, +1, -1, +1, +1, -1, -1, -1, +1, -1, -1, +1, -1, -1, -1, +1, -1, +1, -1, +1, +1, +1, +1, +1, -1, -1, -1, +1, +1, +1, +1, -1, +1, +1, -1, -1, -1, +1, -1, -1, +1, +1, -1, +1, -1, +1, -1, -1, -1, -1, -1, -1, +1, +1, -1, -1, -1, +1, -1, -1, +1, +1, +1, -1, +1, -1, -1, +1, -1, -1, +1, -1, +1, -1, -1, +1, +1, -1, +1, +1, -1, -1, +1, +1, +1, -1, -1, +1, -1, -1, -1, +1, -1, -1, -1, -1, -1, -1, +1, -1, +1, +1, -1, +1, +1, -1, +1, -1, -1, -1, +1, +1, -1, +1, +1, +1, -1, -1, +1, +1, +1, +1, +1, -1, +1, -1, +1, -1, -1, +1, +1, -1, +1, -1, +1, +1, +1, -1, -1, +1, -1, -1, -1, +1, -1, -1, -1, -1, -1, -1, +1, -1, +1, +1, -1, +1, +1, -1, -1, +1, +1, +1, -1, +1, +1, +1, +1, -1, +1, +1, -1, -1, -1, -1, +1, +1, - 1, -1, -1, -1, -1, +1, -1, -1, +1, +1, +1, -1, +1, +1, +1, -1, +1, -1, +1, -1, -1, -1, -1, -1, +1, +1, +1, -1, -1, -1, -1, +1, -1, -1, +1, +1, +1, -1, +1, +1, -1, -1, +1, -1, +1, -1, +1].

The LTF sequence of the 160 MHz NDP that is in the HE format and that is sent on the secondary 160 MHz channel is obtained by performing phase rotation on a 4xLTF sequence sent on the primary 160 MHz channel. A specific sequence is as follows: LTF4x_160_second = [-LTF_80MHz_lower_4x, zeros (1, 23), LTF_80MHz_upper_4x]; or LTF4x_160_second = [LTF_80MHz_lower_4x, zeros (1, 23), -LTF_80MHz_upper_4x]. Herein, LTF4x_160_second indicates an LTF sequence in the 4x mode in the second 160 MHz bandwidth, zeros (1, 23) indicates 23 consecutive zeros.

Optionally, the 320 MHz bandwidth may be changed to an actual 240 MHz bandwidth through preamble puncturing. When the NDP is sent through preamble puncturing, the sent NDP in the HE format may use the following LTF sequence: LTF4x_240 = [LTF_80MHz_lower_4x, zeros (1, 23), LTF_80MHz_upper_4x, zeros (1, 23), LTF_80MHz_lower_4x]; or

LTF4x_240 = [LTF_80MHz_lower_4x, zeros (1, 23), LTF_80MHz_upper_4x, zeros (1, 23), -LTF_80MHz_lower_4x].

It should be understood that an execution sequence of step S103 to step S106 is not limited in this embodiment of this application.

S107: The first station obtains channel state information based on the received NDP.

S108: The second station obtains channel state information based on the received NDP.

Specifically, the first station and the second station separately perform channel estimation (or channel measurement) based on the NDPs received by the first station and the second station, to obtain the channel state information, and may generate corresponding beamforming reports based on an indication in the station information field of the first station and the second station. Each beamforming report includes the channel state information.

The first station (the HE station) generates a high efficiency compressed beamforming frame and channel quality information report frame based on an indication in each subfield of the station information field (namely, the foregoing first station information field) of the first station. The high efficiency compressed beamforming and channel quality information report frame includes an HE MIMO field and a beamforming report field. For the HE MIMO field, refer to the structure shown in FIG. 9.

The second station (the EHT station) generates a corresponding beamforming report based on an indication in each subfield of the foregoing second station information field. If a structure of the second station information field is the structure shown in FIG. 16a or FIG. 16b, the second station generates a beamforming report specified in the EHT standard.

S109: The access point sends a beamforming report poll BFRP trigger frame, where the BFRP trigger frame is used to trigger the first station and the second station to feed back beamforming reports. Correspondingly, the first station and the second station receive the BFRP trigger frame.

It should be understood that an execution sequence of step S107 to step S109 is not limited in this embodiment of this application.

S110: After receiving the BFRP trigger frame, the first station sends a beamforming report, where the beamforming report is generated based on an indication in the first station information field, and the beamforming report carries channel state information.

S111: After receiving the BFRP trigger frame, the second station sends a beamforming report, where the beamforming report is generated based on an indication in the second station information field, and the beamforming report carries channel state information.

Specifically, after receiving the BFRP trigger frame, the first station and the second station may simultaneously/concurrently send (or feed back) the beamforming reports to the access point, or send (or feed back) the beamforming reports to the access point in turn, where respective beamforming reports include respective channel state information. Optionally, the beamforming report may further include channel quality information. It may be understood that step S110 and step S111 may be simultaneously or concurrently performed.

Optionally, a manner in which the first station and the second station simultaneously/concurrently send the beamforming reports includes: After receiving the BFRP trigger frame, the first station and the second station send the respective beamforming reports after a same period of time (for example, one SIFS). Alternatively, time at which the station feeds back the beamforming report is specified in the NDPA frame, and the first station and the second station send the respective beamforming reports when the feedback time indicated by the NDPA frame arrives.

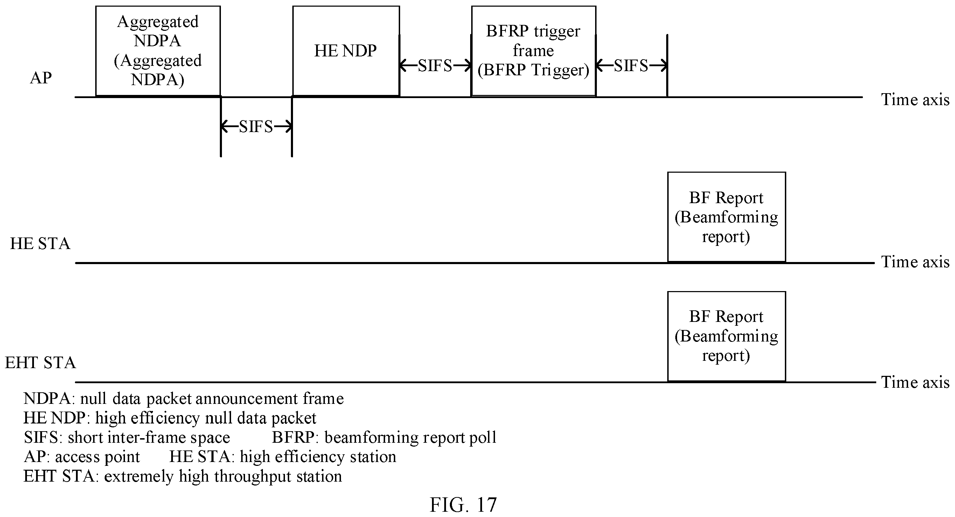

To better understand a procedure of the channel sounding method provided in embodiments of this application, the following describes a specific example. In an example, FIG. 17 is a schematic diagram of a time sequence of a channel sounding method according to an embodiment of this application. As shown in FIG. 17, an AP sends an aggregated NDPA frame, sends an NDP in an HE format after one SIFS, and then sends a BRP trigger frame after one SIFS. An HE STA and an EHT STA each feed back a beamforming report after one SIFS.

It may be learned that in this embodiment of this application, B17 of the station information field is set to 1 and B24 is set to 0, or B23 and B24 of the station information field are set to both 1, to indicate that the station information field is in the HE format or the EHT format. In addition, the ranging bit of the sounding dialog token field of the NDPA frame is set to 0 and the HE bit is set to 1, to indicate that the NDPA frame may be used to notify the HE station to perform channel measurement, and the HE station and the EHT station can simultaneously perform channel sounding, to support beamforming during aggregated packet transmission. In addition, in this embodiment of this application, sent NDPs are all in an HE format, to resolve time misalignment of different types of NDPs (namely, time misalignment of an HE NDP and an EHT NDP). This avoids interference during channel measurement.

**Embodiment 2**

Embodiment 2 of this application mainly describes how to simultaneously perform channel measurement on an HE station, an EHT station, and an EHT+ station, to support beamforming during aggregated packet transmission.

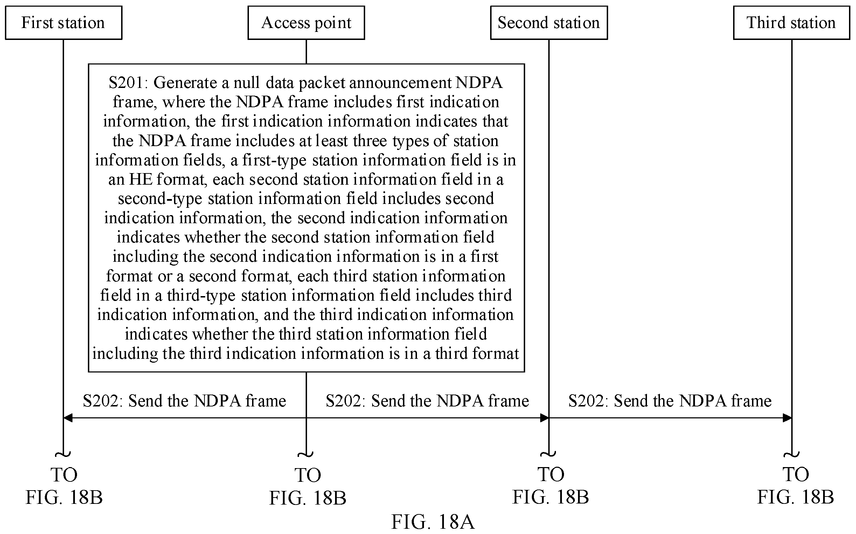

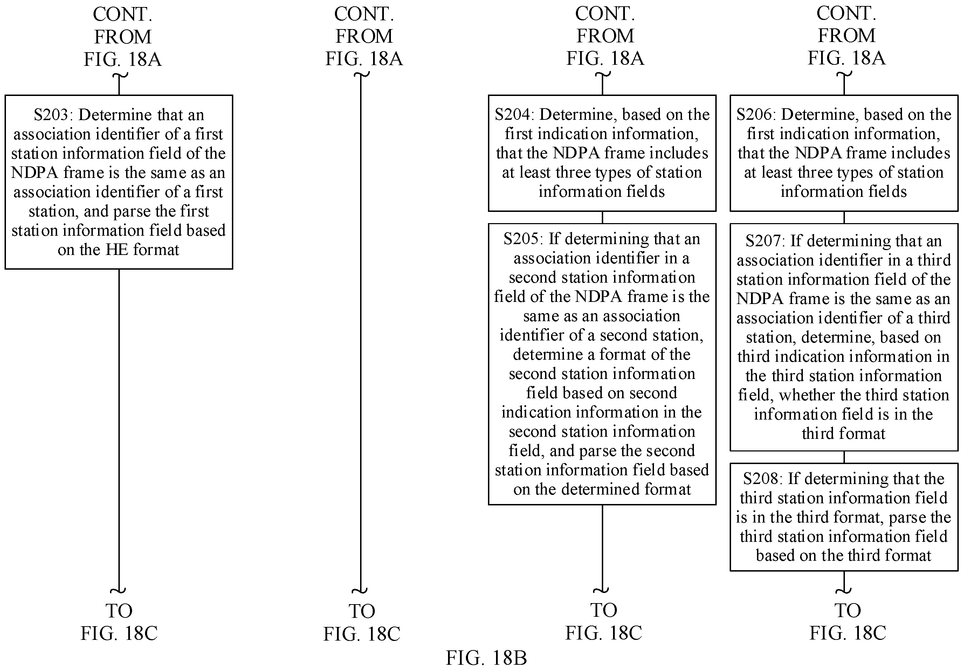

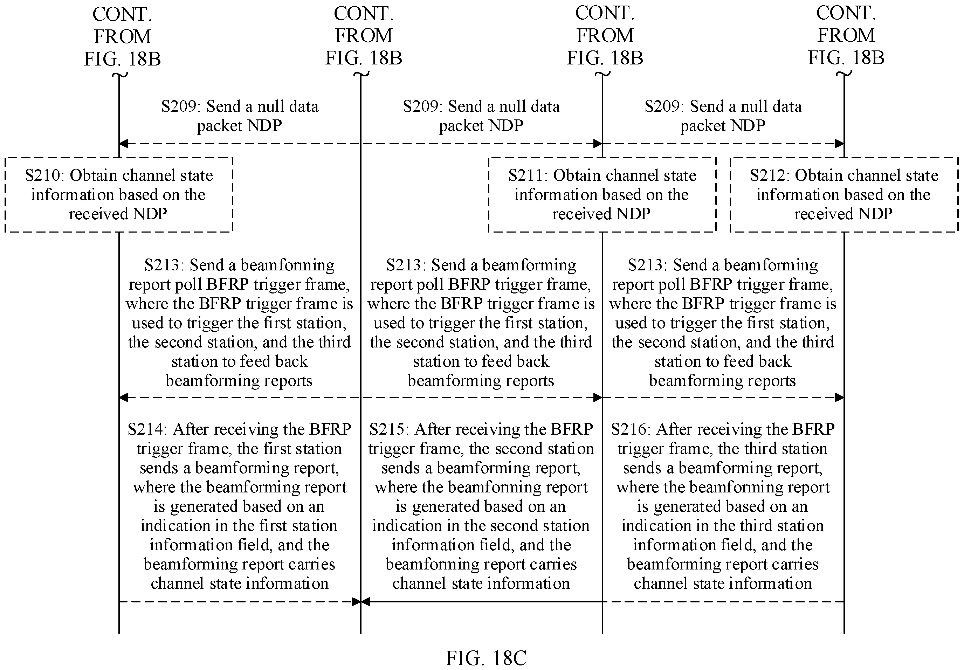

FIG. 18A, FIG. 18B, and FIG. 18C show another schematic flowchart of a channel sounding method according to an embodiment of this application. As shown in FIG. 18A, FIG. 18B, and FIG. 18C, the channel sounding method includes but is not limited to the following steps.

S201: An access point generates a null data packet announcement NDPA frame, where the NDPA frame includes first indication information, the first indication information indicates that the NDPA frame includes at least three types of station information fields, a first-type station information field is in an HE format, each second station information field in a second-type station information field includes second indication information, the second indication information indicates whether the second station information field including the second indication information is in a first format or a second format, each third station information field in a third-type station information field includes third indication information, and the third indication information indicates whether the third station information field including the third indication information is in a third format.

S202: The access point sends the NDPA frame. Correspondingly, a first station, a second station, and a third station receive the NDPA frame.

Specifically, the access point generates and sends the NDPA frame, where the NDPA frame includes the first indication information for indicating that the NDPA frame includes two types of station information fields. The first-type station information field is in the HE format. Each second station information field in the second-type station information field includes the second indication information for indicating whether the second station information field including the second indication information is in the first format or the second format. Each third station information field in the third-type station information field includes the third indication information for indicating whether the third station information field including the third indication information is in the third format. Correspondingly, the first station, the second station, and the third station receive the NDPA frame. The first station is an HE station, the second station is an EHT station, and the third station is an EHT+ station. The first format is an HE format, the second format is an EHT format, and the third format is an EHT+ format.

It should be understood that the first-type station information field may be a station information field sent to the HE station (the station information field can only be in the HE format, because the HE station supports only the 802.11ax standard). The second-type station information field may be a station information field sent to the EHT station (the station information field may be in the EHT format or the HE format, because the EHT station supports both the 802.11ax standard and the 802.11be standard). The third-type station information field may be a station information field sent to the EHT+ station (the station information field may be in the EHT+ format, the EHT format, or the HE format, because the EHT station supports the 802.11ax standard, the 802.11be standard, and a next-generation standard of the 802.11be).

For a frame structure of the NDPA frame, refer to FIG. 10. A length of each station information field in the NDPA frame is 4 bytes. The first indication information is B0 whose value is 0 and B 1 whose value is 1 in a sounding dialog token field of the NDPA frame, and indicates that the NDPA frame includes two types of station information fields. In addition, a ranging bit (namely, a first bit of the sounding dialog token field) of the sounding dialog token field of the NDPA frame is set to 0, and an HE bit (namely, a second bit of the sounding dialog token field) is set to 1, so that the HE station considers the NDPA frame as an HE NDPA frame, and the HE station can parse the NDPA frame. Optionally, each first station information field in the first-type station information field still uses a structure in the 802.11ax standard. For details, refer to the frame structure of the station information field in FIG. 7. Details are not described herein again.

Optionally, for an implementation of the second-type station information field, refer to the descriptions about the second-type station information field in the foregoing Embodiment 1. Details are not described herein again.

Optionally, each third station information field in the third-type station information field includes the third indication information for indicating whether the third station information field including the third indication information is in the third format (namely, the EHT+ format). It should be understood that the third-type station information field includes one or more third station information fields, one third station information field includes one piece of third indication information, and the third indication information indicates only a format of the third station information field.

Because values of both the RU start index and the RU end index in the first-type station information field range from 0 to 73, and the RU start index is less than the RU end index, the third-type station information field may be designed based on values and sizes of the RU start index and the RU end index. The following uses any third station information field in the third-type station information field as an example to describe an implementation of the third-type station information field in detail. It should be understood that the following implementations may be applied to each third station information field in the third-type station information field.

In an implementation, two most significant bits (namely, B23 and B24 that are of the third station information field and that should be understood as the third indication information) of the RU end index of the third station information field are set to both 1, to indicate that the third station information field is in the EHT+ format. In other words, the EHT+ station should parse the third station information field based on the EHT+ format. Optionally, when B23 and B24 of the third station information field are not both 1 (in other words, values of B23 and B24 are "01", "10", or "00"), it indicates that the third station information field is not in the EHT+ format.

If B23 and B24 of the third station information field indicate that the third station information field is in the EHT+ format, for a structure of the third station information field, refer to the structure shown in FIG. 16a. A version information subfield (the third indication information is carried in the subfield) in FIG. 16a indicates whether the third station information field is in the EHT+ format. In this embodiment of this application, a value of the 2-bit version information subfield is 11.

In another implementation, a most significant bit (namely, B17 of the third station information field) of the RU start index of the third station information field is set to 1, and a most significant bit (namely, B24 of the third station information field) of the RU end index is set to 0 (in this case, if the third station information field is parsed based on the HE format, the RU start index is greater than or equal to the RU end index, and an HE station indication rule is no longer complied with), to indicate that the third station information field is in the EHT+ format. In other words, the EHT+ station should parse the third station information field based on the EHT+ format. Optionally, when a value of B17 of the third station information field is not 1 or a value of B24 is not 0 (in other words, values of B17 and B24 are "01", "11", or "00"), it indicates that the third station information field is not in the EHT+ format. It should be understood that, in this implementation, B 17 and B24 herein are the third indication information.

If B17 and B24 of the third station information field indicate that the third station information field is in the EHT+ format, for a structure of the third station information field, refer to the structure shown in FIG. 16b. A version information 1 subfield (or a first version information subfield) and a version information 2 subfield (or a second version information subfield) in FIG. 16b jointly indicate whether the third station information subfield is in the EHT+ format. In this embodiment of this application, a value of the version information 1 subfield (or the first version information subfield, namely, B17) is 1, and a value of the version information 2 subfield (or the second version information subfield, namely, B24) is 0.

It should be understood that when the second indication information is B23 and B24 in the station information field, the third indication information is B17 and B24 in the station information field; or when the second indication information is B17 and B24 in the station information field, the third indication information is B23 and B24 in the station information field. In other words, if the EHT station information field uses the structure shown in FIG. 16a, the EHT+ station information field (the EHT+ station information field in this embodiment of this application is a station information field in an EHT+ format) uses the structure shown in FIG. 16b; or if the EHT station information field uses the structure shown in FIG. 16b, the EHT+ station information field uses the structure shown in FIG. 16a. Optionally, when the third indication information indicates that the third station information field including the third indication information is not in the third format (namely, the EHT+ format), the third station information field further includes fourth indication information. The fourth indication information indicates whether the third station information field is in the first format (namely, the HE format) or the second format (namely, the EHT format). There are also two implementations of the fourth indication information, and the implementations are the same as those of the second indication information. In an implementation, the fourth indication information is B23 and B24 in the third station information field. When values of B23 and B24 are both 1, it indicates that the third station information field is in the second format (namely, the EHT format). When values of B23 and B24 are not both 1 (in other words, values of B23 and B24 are "01", "10", or "00"), it indicates that the third station information field is in the first format (namely, the HE format). In another implementation, the fourth indication information is B 17 and B24 in the third station information field. When a value of B17 is 1 and a value of B24 is 0, it indicates that the third station information field is in the second format (namely, the EHT format). When a value of B17 is not 1, or a value of B24 is not 0 (in other words, values of B17 and B24 are "01", "11", or "00"), it indicates that the third station information field is in the first format (namely, the HE format).

It should be understood that when the third indication information is B23 and B24 in the station information field, the fourth indication information is B17 and B24 in the station information field; or when the third indication information is B17 and B24 in the station information field, the fourth indication information is B23 and B24 in the station information field.

S203: The first station determines that an association identifier of a first station information field of the NDPA frame is the same as an association identifier of the first station, and parses the first station information field based on the HE format.

S204: The second station determines, based on the first indication information, that the NDPA frame includes at least three types of station information fields.

S205: If the second station determines that an association identifier in a second station information field of the NDPA frame is the same as an association identifier of the second station, the second station determines a format of the second station information field based on second indication information in the second station information field, and parses the second station information field based on the determined format.

Specifically, for an implementation of step S203 to step S205 in this embodiment of this application, refer to an implementation of step S103 to step S105 in Embodiment 1. Details are not described herein again.

S206: The third station determines, based on the first indication information, that the NDPA frame includes at least three types of station information fields.

S207: If the third station determines that an association identifier in a third station information field of the NDPA frame is the same as an association identifier of the third station, the third station determines, based on third indication information in the third station information field, whether the third station information field is in the third format. S208: If determining that the third station information field is in the third format, the third station parses the third station information field based on the third format.

Specifically, after receiving the NDPA frame, the third station (the EHT+ station) parses the first indication information in the NDPA frame, and determines that the NDPA includes at least three types of station information fields. Then, the third station searches the station information field of the NDPA frame for a station information field whose association identifier is the same as the association identifier of the third station. Assuming that the third station obtains the third station information field whose association identifier is the same as the association identifier of the third station, the third station determines, based on the third indication information in the third station information field, whether the third station information field is in the third format (namely, the EHT+ format). If determining that the third station information field is in the third format (namely, the EHT+ format), the third station parses the station information field (namely, the third station information field) of the third station based on the third format (namely, the EHT+ format).

Optionally, if determining that the third station information field is not in the third format (namely, the EHT+ format), the third station determines the format of the third station information field based on the fourth indication information included in the third station information field, and parses the station information field (namely, the third station information field) of the third station based on the determined format. The fourth indication information indicates whether the third station information field is in the first format (namely, the HE format) or the second format (namely, the EHT format).

There are two implementations in which the third station determines the format of the third station information field. In a first implementation, the third station directly reads the third indication information (namely, B23 and B24, or B 17 and B24) of the third station information field, and determines a value of the third indication information (namely, B23 and B24, or B17 and B24). When the values of B23 and B24 are 11, or the value of B 17 is 1 and the value of B24 is 0, it is determined that the third station information field is in the EHT+ format (namely, the third format). Optionally, when the values of B23 and B24 are "10", "01", or "00", it is determined that the third station information field is not in the EHT+ format (namely, the third format). Then, the third station reads the fourth indication information (namely, B 17 and B24) in the third station information field, and determines a value of the fourth indication information. When the value of B17 is 1 and the value of B24 is 0, it is determined that the third station information field is in the EHT format (namely, the second format). When the values of B 17 and B24 are "00", "01", or " 11", it is determined that the third station information field is in the HE format (namely, the first format). Alternatively, when the values of B17 and B24 are "00", "01", or "11", it is determined that the third station information field is not in the EHT+ format (namely, the third format). Then, the third station reads the fourth indication information (namely, B23 and B24) in the third station information field, and determines a value of the fourth indication information. When the values of B23 and B24 are 11, it is determined that the third station information field is in the EHT format (namely, the second format). When the values of B23 and B24 are "10", "01", or "00", it is determined that the third station information field is in the HE format (namely, the first format).

In a second implementation, the third station considers B 11 to B24 (14 bits in total) of the third station information field as a 7-bit RU start index (RU start index) and a 7-bit RU end index (RU end index), to obtain an RU start index value and an RU end index value. If the obtained RU start index value is greater than or equal to the RU end index value, or the RU start index value is greater than 73, or the RU end index value is greater than 73, the third station (the EHT+ station) determines that the third station information field is not in the HE format (namely, the first format). The third station (the EHT+ station) further needs to determine, based on the values of B23 and B24 or the values of B17 and B24 of the third station information field, whether the third station information field is in the EHT format (namely, the second format) or the EHT+ format (namely, the third format). In an example, when the values of B23 and B24 of the third station information field are 11, it is determined that the third station information field is in the EHT+ format or the EHT format. In another example, when the value of B 17 of the third station information field is 1 and the value of B24 is 0, it is determined that the third station information field is in the EHT+ format or the EHT format.

Optionally, if the obtained RU start index value is less than the RU end index value, and both the RU start index value and the RU end index value are less than or equal to 73, it is correct to parse the station information field based on the HE format. In this case, the third station (the EHT+ station) determines that the third station information field is in the first format (namely, the HE format), and continues to parse a subsequent subfield based on the HE format. Optionally, the channel sounding method in FIG. 18A, FIG. 18B, and FIG. 18C further includes one or more of the following steps.

S209: The access point sends a null data packet NDP. Correspondingly, the first station, the second station, and the third station receive the NDP.

S210: The first station obtains channel state information based on the received NDP.

S211: The second station obtains channel state information based on the received NDP.

Specifically, for an implementation of step S209 to step S211 in this embodiment of this application, refer to an implementation of step S106 to step S108 in Embodiment 1. Details are not described herein again.

S212: The third station obtains channel state information based on the received NDP.

Specifically, the third station performs channel estimation (or channel measurement) based on the NDP received by the third station, to obtain the channel state information, and may generate a corresponding beamforming report based on an indication in the third station information field. The beamforming report includes the channel state information obtained by the third station. It should be understood that if the third station information field is in the EHT+ format, the third station generates a beamforming report specified in the EHT+ standard.

S213: The access point sends a beamforming report poll BFRP trigger frame, where the BFRP trigger frame is used to trigger the first station, the second station, and the third station to feed back beamforming reports. Correspondingly, the first station, the second station, and the third station receive the BFRP trigger frame.

S214: After receiving the BFRP trigger frame, the first station sends a beamforming report, where the beamforming report is generated based on an indication in the first station information field, and the beamforming report carries channel state information.

S215: After receiving the BFRP trigger frame, the second station sends a beamforming report, where the beamforming report is generated based on an indication in the second station information field, and the beamforming report carries channel state information.

Specifically, for an implementation of step S213 to step S215 in this embodiment of this application, refer to an implementation of step S109 to step S111 in Embodiment 1. Details are not described herein again.

S216: After receiving the BFRP trigger frame, the third station sends a beamforming report, where the beamforming report is generated based on an indication in the third station information field, and the beamforming report carries channel state information.

Specifically, step S214, step S215, and step S216 may be simultaneously or concurrently performed, or may be performed in turn. In other words, after receiving the BFRP trigger frame, the first station, the second station, and the third station may simultaneously/concurrently send (or feed back) the beamforming reports to the access point, or send (or feed back) the beamforming reports to the access point in turn, where respective beamforming reports include respective channel state information. Optionally, the beamforming report may further include channel quality information.

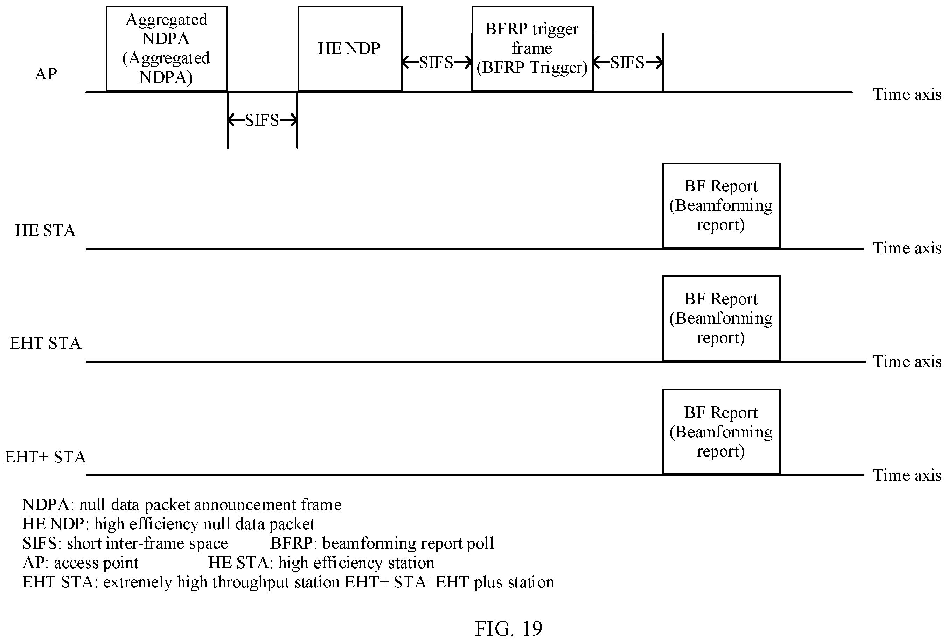

To better understand a procedure of the channel sounding method provided in embodiments of this application, the following describes a specific example. In an example, FIG. 19 is a schematic diagram of another time sequence of a channel sounding method according to an embodiment of this application. As shown in FIG. 19, an AP sends an aggregated NDPA frame, sends an NDP in an HE format after one SIFS, and then sends a BRP trigger frame after one SIFS. An HE STA, an EHT STA, and an EHT+ STA each feed back a beamforming report after one SIFS.

It may be learned that in this embodiment of this application, B17, B23, and B24 in a station information field are designed, to distinguish a format of the station information field. In addition, the ranging bit of the sounding dialog token field of the NDPA frame is set to 0 and the HE bit is set to 1, to indicate that the NDPA frame may be used to notify the HE station to perform channel measurement, and the HE station, the EHT station, and the EHT+ station can simultaneously perform channel sounding, to support beamforming during aggregated packet transmission. In addition, in this embodiment of this application, sent NDPs are all in an HE format, to resolve time misalignment of different types of NDPs. This avoids interference during channel measurement.

The foregoing content describes in detail the methods provided in this application. To better implement the foregoing solutions in embodiments of this application, embodiments of this application further provide corresponding apparatuses or devices.

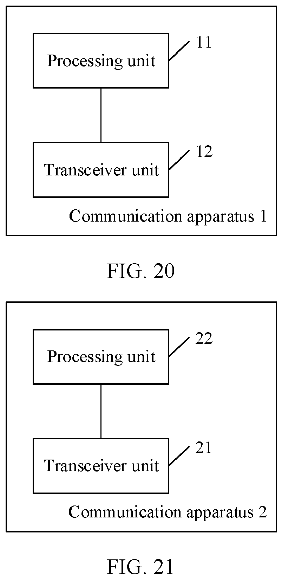

In embodiments of this application, the access point and the station may be divided into functional modules based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. The following describes in detail a communication apparatus in embodiments of this application with reference to FIG. 20 and FIG. 21. The communication apparatus is an access point or a station. Further, the communication apparatus may be an apparatus in an access point, or the communication apparatus may be an apparatus in a STA.

When an integrated unit is used, FIG. 20 is a schematic diagram of a structure of a communication apparatus 1 according to an embodiment of this application. The communication apparatus 1 may be an access point or a chip in the access point, for example, a Wi-Fi chip. As shown in FIG. 20, the communication apparatus 1 may include a processing unit 11 and a transceiver unit 12.

In a design, the processing unit 11 is configured to generate an NDPA frame. The NDPA frame includes first indication information. The first indication information indicates that the NDPA frame includes two types of station information fields. A first-type station information field is in an HE format. Each second station information field in a second-type station information field includes second indication information. The second indication information indicates whether the second station information field including the second indication information is in a first format or a second format. The transceiver unit 12 is configured to send the NDPA frame.

Optionally, the transceiver unit 12 is further configured to send an NDP. The transceiver unit 12 is further configured to send a trigger frame, where the trigger frame is used to trigger a station to feed back a beamforming report.

It should be understood that the communication apparatus 1 in this design may correspondingly perform the foregoing method Embodiment 1, and the foregoing operations or functions of the units in the communication apparatus 1 are separately used to implement corresponding operations of the access point in the foregoing method Embodiment 1. For brevity, details are not described herein again.

In another design, the processing unit 11 is configured to generate an NDPA frame. The NDPA frame includes first indication information. The first indication information indicates that the NDPA frame includes at least three types of station information fields. A first-type station information field is in a high efficiency (high efficiency, HE) format. Each second station information field in a second-type station information field includes second indication information. The second indication information indicates whether the second station information field including the second indication information is in a first format or a second format. Each third station information field in a third-type station information field includes third indication information. The third indication information indicates whether the third station information field including the third indication information is in a third format. The transceiver unit 12 is configured to send the NDPA frame.

Optionally, the transceiver unit 12 is further configured to send an NDP. The transceiver unit 12 is further configured to send a trigger frame, where the trigger frame is used to trigger a station to feed back a beamforming report.

It should be understood that the communication apparatus 1 in this design may correspondingly perform the foregoing method Embodiment 2, and the foregoing operations or functions of the units in the communication apparatus 1 are separately used to implement corresponding operations of the access point in the foregoing method Embodiment 2. For brevity, details are not described herein again.

FIG. 21 is a schematic diagram of a structure of a communication apparatus 2 according to an embodiment of this application. The communication apparatus 2 may be a station or a chip in the station, for example, a Wi-Fi chip. As shown in FIG. 21, the communication apparatus 2 includes a transceiver unit 21 and a processing unit 22.

In a design, the communication apparatus 2 is a second station or a chip in the second station. The transceiver unit 21 is configured to receive an NDPA frame. The NDPA frame includes first indication information. The first indication information indicates that the NDPA frame includes two types of station information fields. A first-type station information field is in an HE format. Each second station information field in a second-type station information field includes second indication information. The second indication information indicates whether the second station information field including the second indication information is in a first format or a second format. The processing unit 22 is configured to determine, based on the first indication information, that the NDPA frame includes two types of station information fields. The processing unit 22 is further configured to: if it is determined that an association identifier in a second station information field of the NDPA frame is the same as an association identifier of the second station, determine a format of the second station information field based on second indication information in the second station information field, and parse the second station information field based on the determined format. Optionally, the transceiver unit 21 is further configured to receive an NDP. The processing unit 22 is further configured to obtain channel state information based on the NDP. The transceiver unit 21 is further configured to receive a trigger frame, where the trigger frame is used to trigger a station to feed back a beamforming report. The transceiver unit 21 is further configured to send a beamforming report, where the beamforming report is generated based on an indication in the second station information field of the NDPA frame, and the beamforming report carries the channel state information.

It should be understood that the communication apparatus 2 in this design may correspondingly perform the foregoing method Embodiments 1 and 2, and the foregoing operations or functions of the units in the communication apparatus 2 are separately used to implement corresponding operations of the second station in the foregoing method Embodiments 1 and 2. For brevity, details are not described herein again.

In another design, the communication apparatus 2 is a third station or a chip in the third station. The transceiver unit 21 is configured to receive an NDPA frame. The NDPA frame includes first indication information. The first indication information indicates that the NDPA frame includes at least three types of station information fields. A first-type station information field is in an HE format. Each second station information field in a second-type station information field includes second indication information. The second indication information indicates whether the second station information field including the second indication information is in a first format or a second format. Each third station information field in a third-type station information field includes third indication information. The third indication information indicates whether the third station information field including the third indication information is in a third format. The processing unit 22 is configured to determine, based on the first indication information, that the NDPA frame includes at least three types of station information fields. The processing unit 22 is further configured to: if it is determined that a third station information field of the NDPA frame is the same as an association identifier of the third station, determine, based on third indication information in the third station information field, whether the third station information field is in a third format. The processing unit 22 is further configured to: if it is determined that the third station information field is in the third format, parse the third station information field based on the third format. Optionally, the transceiver unit 21 is further configured to receive an NDP. The processing unit 22 is further configured to obtain channel state information based on the NDP. The transceiver unit 21 is further configured to receive a trigger frame, where the trigger frame is used to trigger a station to feed back a beamforming report. The transceiver unit 21 is further configured to send a beamforming report, where the beamforming report is generated based on an indication in the third station information field of the NDPA frame, and the beamforming report carries the channel state information.

It should be understood that the communication apparatus 2 in this design may correspondingly perform the foregoing method Embodiment 2, and the foregoing operations or functions of the units in the communication apparatus 2 are separately used to implement corresponding operations of the third station in the foregoing method Embodiment 2. For brevity, details are not described herein again.

The foregoing describes the access point and the station in embodiments of this application. The following describes possible product forms of the access point and the station. It should be understood that any product in any form that has the function of the access point described in FIG. 20 and any product in any form that has the function of the station described in FIG. 21 fall within the protection scope of embodiments of this application. It should be further understood that the following description is merely an example, and product forms of the access point and the station in embodiments of this application are not limited thereto.

In a possible product form, the access point and the station in embodiments of this application may be implemented by using general bus architectures.

The access point includes a processor and a transceiver that is internally connected to and communicates with the processor.

In a design, the processor is configured to generate an NDPA frame. The NDPA frame includes first indication information. The first indication information indicates that the NDPA frame includes two types of station information fields. A first-type station information field is in an HE format. Each second station information field in a second-type station information field includes second indication information. The second indication information indicates whether the second station information field including the second indication information is in a first format or a second format. The transceiver is configured to send the NDPA frame.

In another design, the processor is configured to generate an NDPA frame. The NDPA frame includes first indication information. The first indication information indicates that the NDPA frame includes at least three types of station information fields. A first-type station information field is in an HE format. Each second station information field in a second-type station information field includes second indication information. The second indication information indicates whether the second station information field including the second indication information is in a first format or a second format. Each third station information field in a third-type station information field includes third indication information. The third indication information indicates whether the third station information field including the third indication information is in a third format. The transceiver is configured to send the NDPA frame.

The station includes a processor and a transceiver that is internally connected to and communicates with the processor. In a design, the transceiver is configured to receive an NDPA frame. The NDPA frame includes first indication information. The first indication information indicates that the NDPA frame includes two types of station information fields. A first-type station information field is in an HE format. Each second station information field in a second-type station information field includes second indication information. The second indication information indicates whether the second station information field including the second indication information is in a first format or a second format. The processor is configured to determine, based on the first indication information, that the NDPA frame includes two types of station information fields. The processor is further configured to: if it is determined that an association identifier in a second station information field of the NDPA frame is the same as an association identifier of the second station, determine a format of the second station information field based on second indication information in the second station information field, and parse the second station information field based on the determined format.

In another design, the transceiver is configured to receive an NDPA frame. The NDPA frame includes first indication information. The first indication information indicates that the NDPA frame includes at least three types of station information fields. A first-type station information field is in an HE format. Each second station information field in a second-type station information field includes second indication information. The second indication information indicates whether the second station information field including the second indication information is in a first format or a second format. Each third station information field in a third-type station information field includes third indication information. The third indication information indicates whether the third station information field including the third indication information is in a third format. The processor is configured to determine, based on the first indication information, that the NDPA frame includes at least three types of station information fields. The processor is further configured to: if it is determined that a third station information field of the NDPA frame is the same as an association identifier of the third station, determine, based on third indication information in the third station information field, whether the third station information field is in a third format. The processor is further configured to: if it is determined that the third station information field is in the third format, parse the third station information field based on the third format.

In a possible product form, the access point and the station in embodiments of this application may be implemented by general-purpose processors.

A general-purpose processor for implementing the access point includes a processing circuit and an input/output interface that is internally connected to and communicates with the processing circuit.

In a design, the processing circuit is configured to generate an NDPA frame. The NDPA frame includes first indication information. The first indication information indicates that the NDPA frame includes two types of station information fields. A first-type station information field is in an HE format. Each second station information field in a second-type station information field includes second indication information. The second indication information indicates whether the second station information field including the second indication information is in a first format or a second format. The input/output interface is configured to send the NDPA frame.

In another design, the processing circuit is configured to generate an NDPA frame. The NDPA frame includes first indication information. The first indication information indicates that the NDPA frame includes at least three types of station information fields. A first-type station information field is in an HE format. Each second station information field in a second-type station information field includes second indication information. The second indication information indicates whether the second station information field including the second indication information is in a first format or a second format. Each third station information field in a third-type station information field includes third indication information. The third indication information indicates whether the third station information field including the third indication information is in a third format. The input/output interface is configured to send the NDPA frame.

A general-purpose processor for implementing the station includes a processing circuit and an input/output interface that is internally connected to and communicates with the processing circuit.

In a design, the input/output interface is configured to receive an NDPA frame. The NDPA frame includes first indication information. The first indication information indicates that the NDPA frame includes two types of station information fields. A first-type station information field is in an HE format. Each second station information field in a second-type station information field includes second indication information. The second indication information indicates whether the second station information field including the second indication information is in a first format or a second format. The processing circuit is configured to determine, based on the first indication information, that the NDPA frame includes two types of station information fields. The processing circuit is further configured to: if it is determined that an association identifier in a second station information field of the NDPA frame is the same as an association identifier of the second station, determine a format of the second station information field based on second indication information in the second station information field, and parse the second station information field based on the determined format.

In another design, the input/output interface is configured to receive an NDPA frame. The NDPA frame includes first indication information. The first indication information indicates that the NDPA frame includes at least three types of station information fields. A first-type station information field is in an HE format. Each second station information field in a second-type station information field includes second indication information. The second indication information indicates whether the second station information field including the second indication information is in a first format or a second format. Each third station information field in a third-type station information field includes third indication information. The third indication information indicates whether the third station information field including the third indication information is in a third format. The processing circuit is configured to determine, based on the first indication information, that the NDPA frame includes at least three types of station information fields. The processing circuit is further configured to: if it is determined that a third station information field of the NDPA frame is the same as an association identifier of the third station, determine, based on third indication information in the third station information field, whether the third station information field is in a third format. The processing circuit is further configured to: if it is determined that the third station information field is in the third format, parse the third station information field based on the third format.

It should be understood that the communication apparatuses in the foregoing various product forms have any function of the access point or the station in the method embodiments. Details are not described herein again.

An embodiment of this application further provides a computer-readable storage medium. The computer-readable storage medium stores computer program code. When the processor executes the computer program code, an electronic device performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the interface circuit, to enable the apparatus to perform the method in any one of the foregoing embodiments.

An embodiment of this application further provides a wireless communication system, including an access point and a second station, and optionally, a third station. The access point and the second station may perform the method in Embodiment 1, and the access point, the second station, and the third station may perform the method in Embodiment 2.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium, where the communication medium includes any medium that facilitates transmission of a computer program from one place to another. The storage medium may be any available medium accessible to a general-purpose or a special-purpose computer.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

**Claims**

1. A channel sounding method, comprising:

   generating, by an access point, a null data packet announcement (null data packet announcement, NDPA) frame, wherein the NDPA frame comprises first indication information, the first indication information indicates that the NDPA frame comprises two types of station information fields, a first-type station information field is in a high efficiency (high efficiency, HE) format, each second station information field in a second-type station information field comprises second indication information, and the second indication information indicates whether the second station information field comprising the second indication information is in a first format or a second format; and
sending, by the access point, the NDPA frame.

2. The method according to claim 1, wherein the method further comprises:

sending, by the access point, a null data packet (null data packet, NDP); and
sending, by the access point, a trigger frame, wherein the trigger frame is used to trigger a station to feed back a beamforming report.

3. A channel sounding method, comprising:

receiving, by a second station, a null data packet announcement (null data packet announcement, NDPA) frame, wherein the NDPA frame comprises first indication information, the first indication information indicates that the NDPA frame comprises two types of station information fields, a first-type station information field is in a high efficiency (high efficiency, HE) format, each second station information field in a second-type station information field comprises second indication information, and the second indication information indicates whether the second station information field comprising the second indication information is in a first format or a second format;
determining, by the second station based on the first indication information, that the NDPA frame comprises two types of station information fields; and
if the second station determines that an association identifier in a second station information field of the NDPA frame is the same as an association identifier of the second station, determining, by the second station, a format of the second station information field based on second indication information in the second station information field, and parsing the second station information field based on the determined format.

4. The method according to claim 3, wherein the method further comprises:

receiving, by the second station, an NDP, and obtaining channel state information based on the NDP;
receiving, by the second station, a trigger frame, wherein the trigger frame is used to trigger a station to feed back a beamforming report; and
sending, by the second station, the beamforming report, wherein the beamforming report is generated based on an indication in the second station information field of the NDPA frame, and the beamforming report carries the channel state information.

5. The method according to claim 2 or 4, wherein a bandwidth of the NDP is less than or equal to 160 MHz, and the NDP is an HE NDP.

6. The method according to claim 2, wherein a bandwidth of the NDP is 320 MHz; and
the sending, by the access point, an NDP comprises:
sending, by the access point, a 160 MHz HE NDP on a primary 160 MHz channel, and simultaneously sending, on a secondary 160 MHz channel, an NDP obtained by performing phase rotation on the 160 MHz HE NDP.

7. The method according to claim 2 or 4, wherein a bandwidth of the NDP is 320 MHz; and
the 320 MHz NDP comprises two portions, wherein a first portion is a 160 MHz HE NDP, and a second portion is an NDP obtained by performing phase rotation on the 160 MHz HE NDP.

8. The method according to any one of claims 1 to 7, wherein the first format is an HE format, and the second format is an extremely high throughput (extremely high throughput, EHT) format;

the first format is an HE format, and the second format is an EHT next-generation protocol format; or
the first format is an EHT format, and the second format is an EHT next-generation protocol format.

9. The method according to any one of claims 1 to 8, wherein the first indication information is B0 whose value is 0 and B 1 whose value is 1 in a sounding dialog token field.

**10.** The method according to any one of claims 1 to 9, wherein the second indication information is 2 bits that are respectively located in B23 and B24 of the second station information field comprising the second indication information; and

when values of B23 and B24 of the second station information field comprising the second indication information are both 1, it indicates that the second station information field comprising the second indication information is in the second format; or
when values of B23 and B24 of the second station information field comprising the second indication information are not both 1, it indicates that the second station information field comprising the second indication information is in the first format.

**11.** The method according to claim 10, wherein the second station information field comprising the second indication information further comprises at least one of the following: a resource unit (resource unit, RU) allocation subfield, a codebook size subfield, a reserved field, and a number of columns subfield;

the RU allocation subfield is 7 bits, 8 bits, or 9 bits, a start bit of the RU allocation subfield is B 11 of the second station information field comprising the second indication information, and the RU allocation subfield indicates an RU that feeds back a channel measurement result;
the codebook size subfield is 1 bit that is located in B22 of the second station information field comprising the second indication information, and the codebook size subfield indicates quantization accuracy; and
the number of columns subfield is 4 bits that are located in B28 to B31 of the second station information field comprising the second indication information, and the number of columns subfield indicates a number of columns of a beamforming feedback matrix.

**12.** The method according to any one of claims 1 to 9, wherein the second indication information is 2 bits that are respectively located in B17 and B24 of the second station information field comprising the second indication information; and

when a value of B17 of the second station information field comprising the second indication information is 1 and a value of B24 is 0, it indicates that the second station information field comprising the second indication information is in the second format; or
when a value of B17 of the second station information field comprising the second indication information is not 1 or a value of B24 is not 0, it indicates that the second station information field comprising the second indication information is in the first format.

**13.** The method according to claim 12, wherein the second station information field comprising the second indication information further comprises at least one of the following: a first RU allocation subfield, a second RU allocation subfield, a reserved field, a codebook size subfield, and a number of columns subfield;

the first RU allocation subfield is 6 bits that are located in B11 to B16 of the second station information field comprising the second indication information, the second RU allocation subfield is 1 bit, 2 bits, or 3 bits, a start bit of the second RU allocation subfield is B18 of the second station information field comprising the second indication information, and the first RU allocation subfield and the second RU allocation subfield jointly indicate an RU that feeds back a channel sounding result;
the codebook size subfield is 1 bit that is located in B23 of the second station information field comprising the second indication information, and indicates quantization accuracy; and
the number of columns subfield is 4 bits that are located in B28 to B31 of the second station information field comprising the second indication information, and indicates a number of columns of a beamforming feedback matrix.

**14.** A communication apparatus, comprising:

a processing unit, configured to generate an NDPA frame, wherein the NDPA frame comprises first indication information, the first indication information indicates that the NDPA frame comprises two types of station information fields, a first-type station information field is in an HE format, each second station information field in a second-type station information field comprises second indication information, and the second indication information indicates whether the second station information field comprising the second indication information is in a first format or a second format; and

a transceiver unit, configured to send the NDPA frame.

15. The communication apparatus according to claim 14, wherein the transceiver unit is further configured to:

send a null data packet (null data packet, NDP); and
send, by an access point, a trigger frame, wherein the trigger frame is used to trigger a station to feed back a beamforming report.

16. A communication apparatus, comprising:

a transceiver unit, configured to receive an NDPA frame, wherein the NDPA frame comprises first indication information, the first indication information indicates that the NDPAframe comprises two types of station information fields, a first-type station information field is in an HE format, each second station information field in a second-type station information field comprises second indication information, and the second indication information indicates whether the second station information field comprising the second indication information is in a first format or a second format; and
a processing unit, configured to determine, based on the first indication information, that the NDPA frame comprises two types of station information fields; and
the processing unit is further configured to: if it is determined that an association identifier in a second station information field of the NDPA frame is the same as an association identifier of a second station, determine a format of the second station information field based on second indication information in the second station information field, and parse the second station information field based on the determined format.

17. The communication apparatus according to claim 16, wherein the transceiver unit is further configured to receive an NDP;

the processing unit is further configured to obtain channel state information based on the NDP;
the transceiver unit is further configured to receive a trigger frame, wherein the trigger frame is used to trigger a station to feed back a beamforming report; and
the transceiver unit is further configured to send the beamforming report, wherein the beamforming report is generated based on an indication in the second station information field of the NDPA frame, and the beamforming report carries the channel state information.

18. The communication apparatus according to claim 15 or 17, wherein a bandwidth of the NDP is less than or equal to 160 MHz, and the NDP is an HE NDP.

19. The communication apparatus according to claim 15, wherein a bandwidth of the NDP is 320 MHz; and the transceiver unit is specifically configured to send a 160 MHz HE NDP on a primary 160 MHz channel, and simultaneously send, on a secondary 160 MHz channel, an NDP obtained by performing phase rotation on the 160 MHz HE NDP.

20. The communication apparatus according to claim 15 or 17, wherein a bandwidth of the NDP is 320 MHz; and the 320 MHz NDP comprises two portions, wherein a first portion is a 160 MHz HE NDP, and a second portion is an NDP obtained by performing phase rotation on the 160 MHz HE NDP.

21. The communication apparatus according to any one of claims 14 to 20, wherein the first format is an HE format, and the second format is an EHT format;

the first format is an HE format, and the second format is an EHT next-generation protocol format; or
the first format is an EHT format, and the second format is an EHT next-generation protocol format.

22. The communication apparatus according to any one of claims 14 to 21, wherein the first indication information is B0 whose value is 0 and B 1 whose value is 1 in a sounding dialog token field.

23. The communication apparatus according to any one of claims 14 to 22, wherein the second indication information is 2 bits that are respectively located in B23 and B24 of the second station information field comprising the second indication information; and

when values of B23 and B24 of the second station information field comprising the second indication information are both 1, it indicates that the second station information field comprising the second indication information is in the second format; or

when values of B23 and B24 of the second station information field comprising the second indication information are not both 1, it indicates that the second station information field comprising the second indication information is in the first format.

24. The communication apparatus according to claim 23, wherein the second station information field comprising the second indication information further comprises at least one of the following: an RU allocation subfield, a codebook size subfield, a reserved field, and a number of columns subfield;

the RU allocation subfield is 7 bits, 8 bits, or 9 bits, a start bit of the RU allocation subfield is B11 of the second station information field comprising the second indication information, and the RU allocation subfield indicates an RU that feeds back a channel measurement result;
the codebook size subfield is 1 bit that is located in B22 of the second station information field comprising the second indication information, and the codebook size subfield indicates quantization accuracy; and
the number of columns subfield is 4 bits that are located in B28 to B31 of the second station information field comprising the second indication information, and the number of columns subfield indicates a number of columns of a beamforming feedback matrix.

25. The communication apparatus according to any one of claims 14 to 22, wherein the second indication information is 2 bits that are respectively located in B17 and B24 of the second station information field comprising the second indication information; and

when a value of B17 of the second station information field comprising the second indication information is 1 and a value of B24 is 0, it indicates that the second station information field comprising the second indication information is in the second format; or
when a value of B17 of the second station information field comprising the second indication information is not 1 or a value of B24 is not 0, it indicates that the second station information field comprising the second indication information is in the first format.

26. The communication apparatus according to claim 25, wherein the second station information field comprising the second indication information further comprises at least one of the following: a first RU allocation subfield, a second RU allocation subfield, a reserved field, a codebook size subfield, and a number of columns subfield;

the first RU allocation subfield is 6 bits that are located in B11 to B16 of the second station information field comprising the second indication information, the second RU allocation subfield is 1 bit, 2 bits, or 3 bits, a start bit of the second RU allocation subfield is B18 of the second station information field comprising the second indication information, and the first RU allocation subfield and the second RU allocation subfield jointly indicate an RU that feeds back a channel sounding result;
the codebook size subfield is 1 bit that is located in B23 of the second station information field comprising the second indication information, and indicates quantization accuracy; and
the number of columns subfield is 4 bits that are located in B28 to B31 of the second station information field comprising the second indication information, and indicates a number of columns of a beamforming feedback matrix.

27. A communication apparatus, wherein the communication apparatus comprises a processor and a transceiver, the transceiver is configured to receive and send an NDPA frame, an NDP, and a trigger frame, and the processor is configured to perform the method according to any one of claims 1 to 13.

28. A computer-readable storage medium, wherein the computer-readable storage medium stores program instructions, and when the program instructions are run on a computer, the computer is enabled to perform the method according to any one of claims 1 to 13.

29. A computer program product comprising program instructions, wherein when the program instructions are run on a computer, the computer is enabled to perform the method according to any one of claims 1 to 13.

30. A communication apparatus, wherein the communication apparatus comprises an input/output interface and a processing circuit, the input/output interface is configured to receive and send an NDPA frame, an NDP, and a trigger frame, and the processing circuit is configured to perform the method according to any one of claims 1 to 13.

FIG. 1

FIG. 2a

FIG. 2b

FIG. 3

Bytes
Octets:

| Frame control (Frame Control) | Duration (Duration) | RA (Receiver address) | TA (Transmitter address) | Sounding Dialog Token (Sounding dialog token) | STA Info 1 (Station information 1) | ... | STA Info N (Station information N) | FCS (Frame check sequence) |
|---|---|---|---|---|---|---|---|---|
| 2 | 2 | 6 | 6 | 1 | 2 | | 2 | 4 |

Bits
Bits:

| AID 12 (Association identifier 12) | Feedback Type (Feedback type) | Nc Index (Number of columns index) |
|---|---|---|
| 12 | 1 | 3 |

FIG. 4

Bits

| Bits: | 3 | 3 | 2 | 2 | 1 | 1 | 3 | 1 | 2 | 6 |
|---|---|---|---|---|---|---|---|---|---|---|
| | Nc Index (Number of columns index) | Nr Index (Number of rows index) | BW (Bandwidth) | Ng (Number of grouping) | Codebook Information (Codebook information) | Feedback Type (Feedback type) | Remaining Feedback Segment (Remaining feedback segment) | First Feedback Segment (First feedback segment) | Reserved (Reserved) | Sounding Dialog Token Number (Sounding dialog token number) |

FIG. 5

FIG. 6a

SIFS: short inter-frame space

0 to N times

AP

High efficiency null data packet announcement (HE NDPA)

SIFS

High efficiency null data packet (HE NDP)

SIFS

Beamforming report poll trigger (BFRP Trigger)

SIFS

Time axis

STA

Beamforming report (BF Report)

Beamforming report (BF Report)

Time axis

| AP | High efficiency null data packet announcement (HE NDPA) | SIFS: short inter-frame space | High efficiency null data packet (HE NDP) | SIFS | Beamforming report poll trigger (BFRP Trigger) | SIFS | | SIFS | BFRP Trigger | SIFS | Time axis |

STA 1 — Beamforming report (BF Report) ... Beamforming report (BF Report) — Time axis

STA 2 — Beamforming report ... Beamforming report — Time axis

STA 3 — Beamforming report ... Beamforming report — Time axis

FIG. 6b

Bytes
Octets: | 2 | 2 | 6 | 6 | 1 | 4 | | 4 | 4 |

| Frame control (Frame Control) | Duration (Duration) | RA (Receiver address) | TA (Transmitter address) | Sounding Dialog Token (Sounding dialog token) | STA Info 1 (Station information 1) | ... | STA Info N (Station information N) | FCS (Frame check sequence) |

Bits
Bits: | 11 | 14 | 2 | 1 | 1 | 3 |

| AID 11 (Association identifier 11) | Partial BW Info (Partial bandwidth information) | Feedback Type And Ng (Feedback type and number of grouping) | Disambiguation (Disambiguation) | Codebook Size (Codebook size) | Nc (Number of columns) |

Bits
Bits: | 7 | 7 |

| RU Start Index (Resource unit start index) | RU End Index (Resource unit end index) |

FIG. 7

EP 4 250 805 A1

| 8 μs | 8 μs | 4 μs | 4 μs | 8 μs | 8 μs | Variable | | 4 μs |
|------|------|------|------|------|------|----------|---|------|
| L-STF (Legacy short training field) | L-LTF (Legacy long training field) | L-SIG (Legacy signal field) | RL-SIG (Repeated legacy signal field) | HE-SIG-A (High efficiency signal field A) | HE-STF (HE short training field) | HE-LTF (HE long training field) | ... HE-LTF | PE (Packet extension) |

FIG. 8

EP 4 250 805 A1

Bits

| Bits: 3 | 3 | 2 | 1 | 1 | 2 | 3 | 1 | 7 | 7 | 6 | 4 |
|---|---|---|---|---|---|---|---|---|---|---|---|
| Nc Index (Number of columns index) | Nr Index (Number of rows index) | BW (Bandwidth) | Ng (Number of grouping) | Codebook Information (Codebook information) | Feedback Type Feedback type | Remaining Feedback Segment (Remaining feedback segment) | First Feedback Segment (First feedback segment) | RU Start Index (Resource unit start index) | RU End Index Resource unit end index | Sounding Dialog Token Number (Sounding dialog token number) | Reserved (Reserved) |

FIG. 9

EP 4 250 805 A1

| Bytes Octets: | 2 | 2 | 6 | 6 | 1 | 4 | | 4 | 4 |
|---|---|---|---|---|---|---|---|---|---|
| | Frame control (Frame Control) | Duration (Duration) | RA (Receiver address) | TA (Transmitter address) | Sounding Dialog Token (Sounding dialog token) | STA Info 1 (Station information 1) | ... | STA Info N (Station information N) | FCS (Frame check sequence) |

| Bits Bits: | 1 | 1 | 6 |
|---|---|---|---|
| | Ranging (Ranging) | HE (High efficiency) | Sounding Dialog Token Number (Sounding dialog token number) |

FIG. 10

4 bytes

HE NDPA frame actually transmitted

| HE STA Info 1 (HE station information 1) |
| --- |

Bits
Bits:

| 11 | 14 | 2 | 1 | 1 | 3 |
| --- | --- | --- | --- | --- | --- |
| AID11 (Association identifier 11) | Partial BW Info (Partial bandwidth information) | Feedback Type And Ng (Feedback type and number of grouping) | Disambiguation (Disambiguation) | Codebook Size (Codebook size) | Nc (Number of columns) |

Bits
Bits:

| 12 | 1 | 3 | 12 | 1 | 3 |
| --- | --- | --- | --- | --- | --- |
| AID12 (Association identifier 12) | Feedback Type (Feedback type) | Nc (Number of columns) | AID12 (Association identifier 12) | Feedback Type (Feedback type) | Nc (Number of columns) |

2 bytes | 2 bytes

Frame assumedly received by a VHT STA

| VHT STA Info 1 (VHT station information 1) | STA Info N (VHT station information N) |
| --- | --- |

FIG. 11

EP 4 250 805 A1

Aggregated PPDU
(Aggregated physical
layer protocol data unit)

Sub-PPDU 1 — 80 MHz

Sub-PPDU 2 — 160 MHz

FIG. 12

EP 4 250 805 A1

| 8 μs | 8 μs | 4 μs | 4 μs | 8 μs | 4 μs | 8 μs | | Variable | 4 μs |
|---|---|---|---|---|---|---|---|---|---|
| L-STF (Legacy short training field) | L-LTF (Legacy long training field) | L-SIG (Legacy signal field) | RL-SIG (Repeated legacy signal field) | U-SIG (Universal signal field) | EHT-SIG (EHT signal field) | EHT-STF (EHT short training field) | EHT-LTF (EHT long training field) | ... EHT-LTF | PE (Packet extension) |

FIG. 13

| First station | Access point | Second station |
|---|---|---|

S101: Generate a null data packet announcement NDPA frame, where the NDPA frame includes first indication information, the first indication information indicates that the NDPA frame includes two types of station information fields, a first-type station information field is in an HE format, each second station information field in a second-type station information field includes second indication information, and the second indication information indicates whether the second station information field including the second indication information is in a first format or a second format

S102: Send the NDPA frame          S102: Send the NDPA frame

S103: Determine that an association identifier of a first station information field of the NDPA frame is the same as an association identifier of a first station, and parse the first station information field based on the HE format

S104: Determine, based on the first indication information, that the NDPA frame includes two types of station information fields

TO
FIG. 14B

TO
FIG. 14B

TO
FIG. 14B

FIG. 14A

CONT.
FROM
FIG. 14A

CONT.
FROM
FIG. 14A

CONT.
FROM
FIG. 14A

S105: If determining that an association identifier in a second station information field of the NDPA frame is the same as an association identifier of a second station, determine a format of the second station information field based on second indication information in the second station information field, and parse the second station information field based on the determined format

S106: Send a null data packet NDP

S106: Send a null data packet NDP

S107: Obtain channel state information based on the received NDP

S108: Obtain channel state information based on the received NDP

S109: Send a beamforming report poll BFRP trigger frame, where the BFRP trigger frame is used to trigger the first station and the second station to feed back beamforming reports

S109: Send a beamforming report poll BFRP trigger frame, where the BFRP trigger frame is used to trigger the first station and the second station to feed back beamforming reports

S110: After receiving the BFRP trigger frame, send a beamforming report, where the beamforming report is generated based on an indication in the first station information field, and the beamforming report carries channel state information

S111: After receiving the BFRP trigger frame, send a beamforming report, where the beamforming report is generated based on an indication in the second station information field, and the beamforming report carries channel state information

FIG. 14B

FIG. 15

EP 4 250 805 A1

| B0　　　B10 | B11 ... 　　　B21 | B22 | B23　　B24 | B25　　　　B26 | B27　　B28　　B31 |
|---|---|---|---|---|---|
| AID11 (Association identifier 11) | RU allocation (RU allocation) | Reserved (Reserved) | Codebook Size (Codebook size) | Version Info (Version information) | Feedback Type And Ng (Feedback type and number of grouping) / Disambiguation (Disambiguation) / Nc (Number of columns) |

| AID11 | RU allocation | Reserved | Codebook Size | Version Info | Feedback Type And Ng | Disambiguation | Nc |
|---|---|---|---|---|---|---|---|
| Bits/Bits: 11 | 7–9 | 2–4 | 1 | 2 | 2 | 1 | 4 |

FIG. 16a

| B0 B10 | B11 B16 | B17 | B18 ... | B22 | B23 | B24 | B25 | B26 | B27 B28 | B31 |
|---|---|---|---|---|---|---|---|---|---|---|
| AID11 (Association identifier 11) | RU allocation 1 (RU allocation 1) | Version Info 1 (Version information 1) | RU allocation 2 (RU allocation 2) | Reserved (Reserved) | Codebook Size (Codebook size) | Version Info 2 (Version information 2) | Feedback Type And Ng (Feedback type and number of grouping) | Disambiguation (Disambiguation) | Nc (Number of columns) | |

Bits/Bits:

| 11 | 6 | 1 | 1–3 | 2–4 | 1 | 1 | 2 | 1 | 4 |
|---|---|---|---|---|---|---|---|---|---|

FIG. 16b

FIG. 17

AP

Aggregated NDPA (Aggregated NDPA)

←SIFS→

HE NDP

←SIFS→

BFRP trigger frame (BFRP Trigger)

←SIFS→

Time axis

HE STA

BF Report (Beamforming report)

Time axis

EHT STA

BF Report (Beamforming report)

Time axis

NDPA: null data packet announcement frame
HE NDP: high efficiency null data packet
SIFS: short inter-frame space        BFRP: beamforming report poll
AP: access point       HE STA: high efficiency station
EHT STA: extremely high throughput station

| First station | Access point | Second station | Third station |
|---|---|---|---|

S201: Generate a null data packet announcement NDPA frame, where the NDPA frame includes first indication information, the first indication information indicates that the NDPA frame includes at least three types of station information fields, a first-type station information field is in an HE format, each second station information field in a second-type station information field includes second indication information, the second indication information indicates whether the second station information field including the second indication information is in a first format or a second format, each third station information field in a third-type station information field includes third indication information, and the third indication information indicates whether the third station information field including the third indication information is in a third format

S202: Send the NDPA frame     S202: Send the NDPA frame     S202: Send the NDPA frame

TO
FIG. 18B

TO
FIG. 18B

TO
FIG. 18B

TO
FIG. 18B

FIG. 18A

EP 4 250 805 A1

S203: Determine that an association identifier of a first station information field of the NDPA frame is the same as an association identifier of a first station, and parse the first station information field based on the HE format

S204: Determine, based on the first indication information, that the NDPA frame includes at least three types of station information fields

S206: Determine, based on the first indication information, that the NDPA frame includes at least three types of station information fields

S205: If determining that an association identifier in a second station information field of the NDPA frame is the same as an association identifier of a second station, determine a format of the second station information field based on second indication information in the second station information field, and parse the second station information field based on the determined format

S207: If determining that an association identifier in a third station information field of the NDPA frame is the same as an association identifier of a third station, determine, based on third indication information in the third station information field, whether the third station information field is in the third format

S208: If determining that the third station information field is in the third format, parse the third station information field based on the third format

TO
FIG. 18C

TO
FIG. 18C

TO
FIG. 18C

TO
FIG. 18C

FIG. 18B

EP 4 250 805 A1

S209: Send a null data packet NDP   |   S209: Send a null data packet NDP   |   S209: Send a null data packet NDP

S210: Obtain channel state information based on the received NDP   |   S211: Obtain channel state information based on the received NDP   |   S212: Obtain channel state information based on the received NDP

S213: Send a beamforming report poll BFRP trigger frame, where the BFRP trigger frame is used to trigger the first station, the second station, and the third station to feed back beamforming reports   |   S213: Send a beamforming report poll BFRP trigger frame, where the BFRP trigger frame is used to trigger the first station, the second station, and the third station to feed back beamforming reports   |   S213: Send a beamforming report poll BFRP trigger frame, where the BFRP trigger frame is used to trigger the first station, the second station, and the third station to feed back beamforming reports

S214: After receiving the BFRP trigger frame, the first station sends a beamforming report, where the beamforming report is generated based on an indication in the first station information field, and the beamforming report carries channel state information   |   S215: After receiving the BFRP trigger frame, the second station sends a beamforming report, where the beamforming report is generated based on an indication in the second station information field, and the beamforming report carries channel state information   |   S216: After receiving the BFRP trigger frame, the third station sends a beamforming report, where the beamforming report is generated based on an indication in the third station information field, and the beamforming report carries channel state information

FIG. 18C

EP 4 250 805 A1

NDPA: null data packet announcement frame
HE NDP: high efficiency null data packet
SIFS: short inter-frame space       BFRP: beamforming report poll
AP: access point            HE STA: high efficiency station
EHT STA: extremely high throughput station EHT+ STA: EHT plus station

FIG. 19

FIG. 20

FIG. 21

## INTERNATIONAL SEARCH REPORT

International application No.

**PCT/CN2021/135839**

**A. CLASSIFICATION OF SUBJECT MATTER**

H04W 24/08(2009.01)i; H04L 1/00(2006.01)i

According to International Patent Classification (IPC) or to both national classification and IPC

**B. FIELDS SEARCHED**

Minimum documentation searched (classification system followed by classification symbols)

H04W H04L H04B

Documentation searched other than minimum documentation to the extent that such documents are included in the fields searched

Electronic data base consulted during the international search (name of data base and, where practicable, search terms used)

CNTXT; WPABSC; ETSI; EPONPL; 3GPP; IETF; ENTXTC; IEEE: 802.11be, 站点信息, 字段, NDPA, 空数据分组声明, HE, 高效, EHT, 极高吞吐率, sta info, field, null data packet announcement, high efficient, extremely high throughput

**C. DOCUMENTS CONSIDERED TO BE RELEVANT**

| Category* | Citation of document, with indication, where appropriate, of the relevant passages | Relevant to claim No. |
|---|---|---|
| X | Liu Chenchen et al. "EHT NDPA Frame Design Discussion" *IEEE802.11-20/1015r5*, 07 July 2020 (2020-07-07), pp. 2-17 | 1-30 |
| A | CN 111162825 A (HUAWEI TECHNOLOGIES CO., LTD.) 15 May 2020 (2020-05-15) entire document | 1-30 |
| A | US 2020358486 A1 (SUH JUNG HOON et al.) 12 November 2020 (2020-11-12) entire document | 1-30 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 February 2022** | **23 February 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/135839**

| Patent document cited in search report | | | Publication date (day/month/year) | Patent family member(s) | | | Publication date (day/month/year) |
|---|---|---|---|---|---|---|---|
| CN | 111162825 | A | 15 May 2020 | EP | 3866505 | A1 | 18 August 2021 |
| | | | | EP | 3866505 | A4 | 22 December 2021 |
| | | | | US | 2021266054 | A1 | 26 August 2021 |
| | | | | WO | 2020094098 | A1 | 14 May 2020 |
| | | | | BR | 112021008941 | A2 | 10 August 2021 |
| | | | | KR | 20210082512 | A | 05 July 2021 |
| | | | | SG | 11202104817 S | A | 29 June 2021 |
| | | | | AU | 2019375823 | A1 | 10 June 2021 |
| US | 2020358486 | A1 | 12 November 2020 | WO | 2020224499 | A1 | 12 November 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011447158